# EUROPÄISCHE PATENTSCHRIFT

(11) **EP 4 285 861 B1**
(45) Veröffentlichungstag und Bekanntmachung des Hinweises auf die Patenterteilung: **29.01.2025**
(21) Anmeldenummer: 22176986.2
(22) Anmeldetag: 02.06.2022
(51) Int. Cl.: A61C 8/00

(54) **DENTALIMPLANTAT**
DENTAL IMPLANT
IMPLANT DENTAIRE

(43) Veröffentlichungstag der Anmeldung: 06.12.2023
(73) Patentinhaber: SIC Invent AG, 4055 Basel (CH)
(72) Erfinder: WINTERHOFF, Jörg, 53115 Bonn (DE); JÖRN TANCK, Oke, 37085 Göttingen (DE); VON MALOTTKI, Marcus, 40822 Mettmann (DE)
(74) Vertreter: Tergau & Walkenhorst Intellectual Property GmbH

(56) Entgegenhaltungen:
- EP-A1- 2 845 561
- WO-A1-2011/055358
- WO-A1-2020/086611

## Beschreibung

Die Erfindung betrifft ein Dentalimplantat nach dem Oberbegriff von Anspruch 1.

Die Versorgung eines Patienten mit künstlichem Zahnersatz, der anstelle des oder der vormals vorhandenen natürlichen Zähne tritt, hat gewöhnlich sowohl ästhetische als auch medizinische Hintergründe. Einerseits kann optisch der Eindruck eines vollständigen Gebisses hergestellt werden. Andererseits kann das Fehlen von Zähnen auch zu körperlichen Veränderungen wie Knochenabbau im Bereich des Kiefers, Verschiebungen bzw. "Wandern" der noch vorhandenen Zähne in Richtung der entstandenen Lücke, oder Extrudierungen der gegenüberliegenden Zähne führen.

Wird als künstlicher Zahnersatz ein dentales Implantat bzw. Dentalimplantat verwendet, wird dieses in der entstandenen Lücke in den Kieferknochen eingesetzt, insbesondere eingeschraubt, wo es möglichst fest mit dem Knochen verwächst. Von dem Implantat wird ein Abutment aufgenommen, welches dann den sichtbaren Zahnersatz, wie beispielsweise eine Krone, trägt.

Das Dentalimplantat weist typischerweise einen Kern mit einem Gewinde, das sich vom zervikalen Bereich zu einem gegenüberliegenden apikalen Bereich erstreckt. Eine prothetische Schnittstelle des Implantats erlaubt die Verbindung mit künstlichem Zahnersatz wie Brücken oder Kronen.

Bei der immer wichtiger werdenden Sofortversorgung von Patienten ist oft nur ein Knochenangebot schlechter Qualität und/oder weicher Knochen verfügbar.

Bekannte Implantate sind in diesen Situationen nur bedingt einsetzbar, da sie nach der Implementation keine unmittelbare Belastung ermöglichen. In weichem Knochen sind die Trabekel sehr fragil. Bekannte Implantate mit selbstschneidender Geometrie schneiden den weichen Konchen nicht sauber, sondern zerkleinern die fragilen Strukturen, was dem Erreichen einer hohen Primärstabilität entgegenwirkt.

Aus der EP 3 235 465 B1 ist eine Dentalimplantat mit einer prothetischen Schnittstelle in seinem zervikalen Bereich, einem Kern und mindestens einem Gewinde, das sich vom zervikalen Bereich zu einem gegenüberliegenden apikalen Bereich erstreckt, bekannt, wobei das Gewinde Schneidkaten aufweist.

Die EP 2 845 561 A1 beschreibt ein selbstbohrendes Dentalimplantat mit einer propellerartigen Spitze. Das Implantatgewinde weist Schneidkanten auf.

Aus der WO 2020/086611 A1 ist ein Dentalimplantat bekannt, bei welchem sich eine rechtsgängige Gewindeform mit kontinuierlichen Windungen entlang des Implantatkörpers windet. Eine nachlaufende Flanke der Gewindeform ist zurückgewinkelt. Der zentrale Bereich umfasst eine Reihe von Rillen mit linksgängigem Drall. Jede Rille besteht aus verschiedenen Rillensegmenten. Eine Verdichtungsrampe wird entlang des Scheitels der Gewindeform zwischen zwei in Umfangsrichtung benachbarten Rillensegmenten gebildet.

Die WO 2011/055358 A1 beschreibt ein Dentalimplantat mit einem Körper. Am apikalen Ende des Körper sind zwei oder mehr Spanräume vorgesehen, von denen einer ein kondensierender und der andere ein schneidender Spanraum ist. Das Implantat weist ein schraubenförmiges Gewinde mit variablem Profil auf, das sich entlang des konischen Bereichs erstreckt.

Der Erfindung liegt daher die Aufgabe zugrunde, ein dentales Implantat bereitzustellen, welches eine besonders zuverlässige Primärstabilität erlaubt.

Diese Aufgabe wird erfindungsgemäß gelöst durch ein Dentalimplantat mit den Merkmalen von Anspruch 1.

Die Erfindung geht von der Überlegung aus, dass die Sofortversorgung von Patienten durch Dentalimplantate immer wichtiger wird. In diesen Fällen ist der konkrete Implantationsbereich im Kiefer häufig suboptimal, beispielsweise durch zu weiches Knochengewebe oder Knochengewebe in schlechtem Zustand. Ein Dentalimplantat, welches hier erfolgreich eingesetzt werden kann, muss in seinem Aufbau diesen Bedingungen Rechnungen tragen und eine zuverlässige Versorgung ermöglichen. Das Dentalimplantat sollte eine hohe Primärstabilität erzeugen, um eine unmittelbare Belastung zu ermöglichen.

Wie nunmehr erkannt wurde, können diese Anforderungen durch konstruktive und funktionale Merkmale im Bereich des Gewindes und des zervikalen Bereiches erfüllt werden. Insbesondere das Drehmoment beim Eindrehen, das sehr stark mit der Primärstabilität korreliert, sollte direkt beim Eindrehen des Implantats gezielt aufbringbar sein. Durch den Verdichtungsbereich wird der Knochen definiert nach exterior, d. h. normal auf der Kontur nach außen, d. h. zu den Gewindespitzen hin, kompaktiert sowie in die Gewindetäler und an die Gewindeflanken verdrängt, wodurch zum einen ein hohes Maß an Knochen/Implantat-Kontakt erzielt wird, und zum anderen besonders durch den dabei vor-kompaktierten Knochen eine weitere Verbesserung in Bezug auf den stabilen Halt des Implantates direkt nach Insertion im Knochen erreicht wird. Die besondere Weise der Knochenverdichtung erhöht die sogenannte Primärstabilität, die besonders bei einer Sofortversorgung wichtig ist. Hier wird das Implantat unmittelbar oder nach kürzerer Zeit durch die Kaufunktion unvermeidlichen Belastungen ausgesetzt.

Die Gewinderichtung entspricht der Implantat-Insertionsrichtung. In Drehrichtung gesehen ist die Schneidkante an der Rückseite des Schneidbereichs angeordnet. Dies entspricht vorteilhafterweise dem Bereich des Schneidbereichs, der als erstes an einer räumlich festen gedachten Position im Knochen beim Eindrehen vorbeistreicht ohne diesen zu Schneiden. Die Schneidkante ist bevorzugt an dem Ende des Schneidbereichs angeordnet, welches am weitesten von dem Verdichtungsbereich entfernt ist.

Die Schneidkante ist derart ausgerichtet, dass sie bei dem Eindrehen bzw. der Insertion nicht schneidet und beim Drehen des Implantats entgegengesetzt zur Insertionsrichtung das Knochengewebe schneidet. Der Winkel der Schneidkante korreliert vorteilhafterweise im Wesentlichen mit dem Winkel des kanalförmigen Spanraums.

An die besondere Form des Verdichtungsbereiches schließt sich, insbesondere kontinuierlich entgegengesetzt gekrümmt, ein Schneidbereich an. Dieser Schneidbereich hat die Funktion, dass beim Zurückdrehen des Implantates diese Schneiden den Knochen reduzieren und damit die Knochenkompression reduzieren. Diese Funktion ist dann besonders wichtig, wenn interoperativ ein zu hohes Einschraubdrehmoment beim Inserieren des Implantates entsteht, bei dem der Knochen zu hoch verdichtet würde oder der Knochen in den Strukturen des Implantatbettes eine zu hohe Härte aufweist, die eine Implantation nachteilig beeinflussen würde.

Dem Operateur ist es nun neuheitlich möglich, je nach den operativen Gegebenheiten, das gewünschte Einschraubdrehmoment oder die Primärstabilität des Implantates ohne weitere Werkzeuge oder Prozeduren optimal zu steuern.

Durch Einschrauben im Uhrzeigersinn wirken die Verdichtungsbereiche der Spannuten, und durch kurzes Zurückdrehen kommen die entgegengesetzt wirkenden Schneidbereiche in Funktion.

Erfindungsgemäß ist der Verdichtungsbereich gerundet ausgebildet und weist senkrecht zu einer Mittelachse des Dentalimplantats gesehen von einem in radialer Richtung der Mittelachse nächsten Punkt maximaler Ausnehmungstiefe eine aus der dortigen Konkavität startende S-Kurve /S-förmige Kurve bzw. sinusförmige Kurve auf. Ab dem Übergang des mittelachsnahen konkaven Teils der S-Kurve in den konvexen -auf das Implantatäußere zulaufenden- Teil nimmt diese bevorzugt die Form einer Halbparabel an, deren Steigung harmonisch über den Verlauf nach exterior bzw. nach außen hin abnimmt. Diese Geometrie erlaubt eine knochenschonende degressive (über den Verlauf abnehmende) Verdrängung, d. h. bei gleichem zurückgelegtem Kreisbogen beim Einschrauben des Implantates wird im Bereich der größeren Steigung der Knochen schneller nach außen verdrängt und kompaktiert als im Bereich der geringeren Steigung. Dies ergibt den physiologischen Vorteil der Knochenschonung, da der initial weichere Knochen progressiv vorverdichtet wird und in der Folge schonend degressiv, durch die auslaufende Steigung, der Knochen lokal seine Endverdichtung erreicht.

Die Steigungen der S-Kurve, insbesondere einer darin enthaltenen Halbparabel können über den Verlauf der Implantatlänge von apikal bis koronal in Abhängigkeit des lokalisiert gewünschten Verdrängungsvolumens und der Intensität der Verdrängung variieren.

Die Wirkweise der Spannuten sollte sich vorteilshaft in der vertikalen Höhe des Implantatkörpers verändern. So ist am apikalen Ende des Implantates ein tiefer und radial weit ausgedehnter Unterbrechungsbereich vorteilhaft, während im koronalen oberen Bereich des Implantates die Spannuten weniger tief und radial ausladend sind. Maßgeblich für die vorteilshafte Ausführung ist ausgewogene Konstruktion mit ausreichender mechanischer Stabilität durch einen möglichst massiven koronalen Gewindekern, welcher vorzugsweise die Innengeometrie der Implantatschnittstelle zu den prothetischen Komponenten aufweist.

Weiter ist die Knochenhärte, wie bereits ausgeführt, zum apikalen Ende des Implantates in der Regel weicher. In dieser unteren Zone sollte die stärkste Funktion der Verdichtung mittels stark ausgeprägten Spannuten erfolgen, welche dann nach koronal abnehmend sind. Durch den in Richtung koronal zunehmenden Querschnitt des Gewindekerns erfolgt eine zusätzliche Verdichtung des Knochens. Da in dieser Zone der Knochen zunehmend härter wird, sollte sich der komprimierende Verdichtungsverlauf zunehmend in einen Schneidverlauf ändern.

Der Übergang von Verdichtungsverlauf zu Schneidverlauf entsteht kontinuierlich über die apikale S-Kurve, welche sich nach koronal zunehmend eine Bogen-Kurve wandelt. Durch diesen vorteilhaften Verlauf kann eine hohe mechanische Stabilität erreicht werden bei gleichzeitig optimaler Verdrängungs- und Schneid-Funktion in der jeweilige Knochenzone. Zudem kann durch die vorangehend beschriebenen Variationen im Steigungsverlauf der verdrängenden Anteile besser den unterschiedlichen in diesen Zonen vorkommenden Knochendichten von apikal (der Regel spongiös/weich) bis koronal (in der Regel dichter/härter) Rechnung getragen werden.

Der Öffnungswinkel der jeweiligen Ausnehmung ist erfindungsgemäß ein spitzer Winkel und liegt bevorzugt zwischen 40° und 90°, insbesondere von 56°. Ein zu kleiner Öffnungswinkel würde zu einer sehr kurzen S-Kurve führen, bei welcher der Knochen in Folge der Trägheit der elastischen Trabekelstruktur nur unzureichend verdichtet würde. Ein zu großer Winkel würde die S-Kurve verlängern und dabei die radialen Außengewinde als in Ihrer Führungs- und Stützfunktion zu sehr unterbrechen. Somit ist der geeignete Öffnungswinkel in der jeweiligen Implantatzone besonders wichtig.

Der Verdichtungsbereich ist gerundet ausgebildet und weist senkrecht zu einer Mittelachse des Dentalimplantats gesehen von einem in radialer Richtung der Mittelachse nächsten Punkt maximaler Ausnehmungstiefe eine positive, monoton abnehmende Steigung auf. Diese Geometrie erlaubt eine knochenschonende degressive (über den Verlauf abnehmende) Verdrängung, d. h. bei gleichem zurückgelegtem Kreisbogen beim Einschrauben des Implantates wird im Bereich der größeren Steigung der Knochen schneller nach außen verdrängt und kompaktiert als im Bereich der geringeren Steigung. Dies ergibt den physiologischen Vorteil der Knochenschonung, da der initial weichere Knochen progressiv vorverdichtet wird und in der Folge schonend degressiv, durch die auslaufende Steigung, der Knochen lokal seine Endverdichtung erreicht.

Der Schneidbereich ist erfindungsgemäß gerundet ausgebildet und weist senkrecht zu einer Mittelachse des Dentalimplantats gesehen von einem in radialer Richtung der Mittelachse nächsten Punkt maximaler Ausnehmung in Richtung der Schneidkante eine Kontur mit konstantem Radius auf, der in einen Geradenabschnitt übergeht. Auf diese Weise wird eine ausgewogene Scheid-Effizienz und Gewebeschonung in Verbindung mit dem sich aus dem Schneidewinkel fortsetzenden ablenkenden Spanabtransport und der Spanaufnahme optimiert.

Die Ausnehmung mit Schneidbereich und Verdichtungsbereich weist erfindungsgemäß eine im Wesentlichen sinuswellenförmige Kontur auf. Diese Kontur vereint in ihrer Geometrie die oben beschriebene Funktion der Knochenverdichtung und Verdrängung bei entsprechender Drehrichtung sowie die ebenfalls ober beschriebene Schneidefunktion und Spanabfuhr bzw.-verlagerung bei gegenläufiger Drehrichtung.

Der Winkel der jeweiligen Schneidkante bezogen auf die Tangente des Außendurchmessers des Gewindes liegt vorteilhafterweise zwischen 70 - 150°. Der Schneidbereich hat die Funktion, dass beim Zurückdrehen des Implantates diese Schneiden den Knochen reduzieren und damit die Knochenkompression reduzieren.

Die Wirkweise der Schneidkanten sollte sich vorteilshaft in der vertikalen Höhe des Implantatkörpers verändern. So ist am apikalen Ende des Implantates ein tiefer und radial weit ausgedehnter Unterbrechungsbereich vorteilhaft, während im koronalen oberen Bereich des Implantates die Spannuten weniger tief und radial ausladend sind. Maßgeblich für die vorteilshafte Ausführung ist eine ausgewogene Konstruktion mit ausreichender mechanischer Stabilität durch einen möglichst massiven koronalen Gewindekern, welcher vorzugsweise die Innengeometrie der Implantatschnittstelle zu den prothetischen Komponenten aufweist.

Weiter ist die Knochenhärte, wie bereits ausgeführt, zum apikalen Ende des Implantates in der Regel weicher. In dieser unteren Zone sollte die stärkste Schneidefunktion mittels Schneidwinkel kleiner 90° sein, welcher dann nach koronal zunehmend, also weniger aggressiv ist. Da in der koronalen Zone der Knochen zunehmend härter wird, sollten sich die Schneiden weniger aggressiv in die Knochenstruktur einschneiden, sondern eher schonend schälend, den Knochen reduzieren. Damit wird in ungünstigen Knochenverhältnissen ein Verhaken oder Festsetzen des Implantates beim Rückwärtsdrehen verhindert, oder ein zu hohes Rückwärtsdrehmoment vermieden.

Der Übergang von Schneidverlauf zu Verdichtungsverlauf entsteht kontinuierlich über die apikale S-Kurve, welche sich nach koronal zunehmend eine Bogen-Kurve wandelt. Durch diesen vorteilhaften Verlauf kann eine hohe mechanische Stabilität erreicht werden bei gleichzeitig optimaler Verdrängungs- und Schneid-Funktion in der jeweilige Knochenzone.

Der Winkel des Anstellwinkels der Schneidkante bezogen auf die Seitenansicht der Schneide bzw. des Schneidbereichs beträgt vorteilhafterweise zwischen 20 - 80° beträgt. Die Schneide bezeichnet hierbei den Teil des umlaufenden Gewindes, in dem die Ausnehmung eingebracht ist. Der Anstellwinkel ist dabei definiert zwischen äußerem Umfang der Schneide im Bereich der Schneidkante und der Schneidkante.

Mittels dieses Anstellwinkels werden bei Rückwärtsdrehung die Knochenspäne in apikale Richtung transportiert, also in die tendenziell weichere Knochenzone. Damit erreicht die Konfiguration eine zusätzliche Verdichtung der lokalen Knochenstruktur.

Um einen zuverlässigen Vorschub des Implantates beim Einschrauben sicherzustellen, bei gleichzeitig hoher und gewebeschonender Verdichtungsfunktion, ist vorteilhafterweise ein Zonenverhältnis einer umfangsseitigen Ausdehnung einer passiven Gewindezone, in der keine Ausnehmung vorhanden ist zu einer umfangsseitigen Ausdehnung einer aktiven Zone, in der eine Ausnehmung vorhanden ist, größer als 1. Besonders bevorzugt steigt das Zonenverhältnis von der Implantatspitze in koronaler Richtung von einem Wert größer als 1 zu einem Wert größer als 5, insbesondere 6.

Die Ausnehmungen entlang des Gewindes bilden vorteilhafterweise wenigstens einen kanalförmigen Spanraum (d. h. einen Raum, im dem sich Knochenspäne sammeln können) bzw. Kanal, der sich von einer Implantatspitze zum Gewindeauslauf erstreckt. Der kanalförmige Spanraum bildet einerseits die geometrische Basis der von apikal nach koronal variierenden Ausformungen der Knochen - kompaktierend und -schneidend wirkenden Elemente als auch die funktionelle Basis von Knochenspantransport und -verlagerung. Späne geschnittenen Knochens finden dort Platz. In der Ausführung gewendelt umlaufender kanalförmiger Spanräume werden sie zudem, entsprechend der Drehrichtung, nach apikal, also dorthin, wo der Knochen in den meisten Fällen besonders spongiös und weich ist, abtransportiert und tragen dort zur Kompaktierung bei.

Des Weiteren bilden Sie ein Element der mechanischen Retention in Bezug auf rotatorische Kräfte (Torque). Der beim Eindrehen des Implantates in den Knochen im Verdrängungsmodus kompaktierte Knochen wölbt sich, in individuell nach Knochenbeschaffenheit umfangreichem Maße, durch Rückstellung wieder in diese Rillen ein und bewirkt einen neben der Friktion zwischen Knochen und Implantat eine zusätzliche retentive Verankerung in Form eines Verdrehschutzes, was zu einer Steigerung der Primärstabilität führt.

In einer bevorzugten Ausführungsform weist das Dentalimplantat drei kanalförmige Spanräume auf, die in Umfangrichtung gleichverteilt sind. Dies bedeutet insbesondere, dass benachbarte kanalförmige Spanräume jeweils einen Winkel von 120° zwischen sich einschließen. Eine gleichmäßig umlaufende Verteilung von drei kanalförmigen Spanräumen und damit auch der verdichtenden und schneidenden assoziierten Geometrien, wie vorausgehend beschrieben, bewirkt, dass aktive unterbrochene Gewindezonen (Schneid- und Verdichtungsbereiche) mit passiven radial maximal ausgedehnten Zonen des Gewindes (Einschraubführung und Vorschubfunktion in den Knochen) in einem Verhältnis stehen, das für die meisten Knochenqualitäten vorteilhaft ist.

Mit dem Focus auf andere Knochenqualitäten, z. B. extrem hart oder extrem weich, können auch andere Anzahlen von kanalförmigen Spanräumen bzw. Kanälen mit den assoziierten aktiven Elementen eine sinnvolle Anwendung finden.

In einer weiteren bevorzugten Ausführungsform sind genau zwei kanalförmige Spanräume vorgesehen. Bei zwei kanalförmigen Spanräumen ergeben sich Vorteile zugunsten der größeren aktiven Zone, da man diese tiefer und knochenschonend gestalten kann bei gleichzeitig günstigem Verhältnis aus passiver Gewindezone und aktiver Zone größer 1.

Vorteilhafterweise sinkt ein Ausnehmungsverhältnis zwischen einem maximalen Schneidenradius, welcher der radialen Entfernung der Schneidkante bzw. eines Punktes, insbesondere am meisten entfernten Punktes, der Schneidkante zur Mittelachse des Dentalimplantats entspricht, und einem maximalen Ausnehmungsradius bzw. einer maximalen Ausnehmungstiefe, die die radiale Entfernung des Punktes der Ausnehmung, der am nächsten zur Mittelachse des Dentalimplantats liegt, in koronaler Richtung, insbesondere von 1,7 auf 1,0.

In einer bevorzugten Ausführungsform verläuft der jeweilige kanalförmige Spanraum radial gewunden im Gewinde. Eine gleichmäßig umlaufend, gewendelte Verteilung von kanalförmigen Spanräumen und damit auch der verdichtenden und schneidenden assoziierten Geometrien hat den Vorteil, dass bei Zonen unterschiedlicher Knochendichte, vornehmlich in der Nähe harter Knochenwände oder Lamellen, immer nur eine kleine aktive verdrängende oder schneidende Implantatzone mit der harten Struktur interagiert, und bei weiterer Drehung, die nächste kleine aktive Zone auf anderer Höhe zeitversetzt aktiv wird. Eine solche Konfiguration verteilt die Eindrehkräfte gleichmäßig und vorteilhaft auf die Rotationen bei der Implantatinsertion. Dabei beträgt vorteilhafterweise die radiale Steigung des jeweiligen kanalförmigen Spanraums zwischen 15 mm und 30 mm pro Umdrehung des Gewindes. In diesem Bereich ist die Verteilung der aktiven und passiven Zonen günstig verteilt das sich ein gleichmäßiges Eindrehen und Rückdrehen des Implantates erlaubt, ohne Drehmomentspitzen in der jeweiligen Drehrichtung.

In einer alternativen, bevorzugten Ausführungsform verläuft der jeweilige kanalförmige Spanraum gerade im Gewinde, d. h. seine radiale Steigung ist Null.

Vorteilhafterweise nimmt die Tiefe der Ausnehmungen vom apikalen Ende zum koronalen Ende des Dentalimplantats gesehen ab. Die aktiven Elemente (Verdichtungsbereich, Schneidebereich, Spanablenkungsgeometrien) müssen im koronalen Bereich weniger intensiv wirken als z. B. in Apex-näheren Bereichen, da hier der Knochen bereits durch mehrere zuvor inserierte Gewindegänge vorbereitet wurde. Sie werden dementsprechend dezenter ausgestaltet, was mit einer nach koronal abnehmenden Tiefe der Ausnehmungen einhergeht. Diese Ausführung ist für die meisten Knochenqualitäten vorteilhaft. Für besondere Fälle kann jedoch auch die Ausführung mit gleichbleibender Tiefe der Ausnehmung und den damit assoziierten aktiven Elementen zur Anwendung kommen.

Durch eine gewendelte Ausgestaltung der von apikal nach koronal gewendelt verlaufenden Kanäle / kanalförmigen Spanräume wird das Knochengewebe beim Eindrehen von oben nach unten abgelenkt. Durch die gewendelte Ausgestaltung der Kanäle ergibt sich ein Anstellwinkel, welcher beim Eindrehen und Verdichtung für den Abtransport der Knochenspäne in laterale und koronale Richtung verantwortlich ist. Des Weiteren sind die spanableitenden Flächen des schneidenden Anteils dergestalt geneigt, dass bei der für den Schneidevorgang stattfindenden Rückwärtsdrehung des Implantates hier eine Ableitung der Späne in Richtung apikal erfolgt.

Da der Knochen von oben nach unten (bezogen auf die Implantatgeometrie von koronal nach apikal) gesehen poröser bzw. spongiöser (schwammartiger) wird, kann so der verdrängte Knochen bzw. die Knochenspäne in Bereiche verschoben werden, in denen die Dichte geringer ist. Auf diese Weise wird eine vorteilhafte Verteilung des verdrängten Knochengewebes um das Implantat erzielt, wodurch die Primärstabilität erhöht wird.

Vorteilhafterweise weist das jeweilige Gewinde eine konstante Steigung auf. Die konstante Gewindesteigung erzeugt einen gleichmäßigen hohen Eindrehvorschub, ohne zusätzliche Verdichtung der Knochenstruktur in Folge einer diskontinuierlichen Steigung.

In einer bevorzugten Ausführungsform weist das Dentalimplantat ein einziges Gewinde auf, welches eine Steigung zwischen 0,6 - 0,9 mm aufweist. Eine Steigung zwischen 0,6 - 0,9 mm hat sich knochenphysiologisch als günstig erwiesen und folgt bekannten wissenschaftlichen Standards.

In einer bevorzugten, alternativen Ausführungsform weist das Dentalimplantat ein Doppelgewinde mit einer Steigung zwischen 1,2 mm und 1, 8 mm auf. Die Ausführung eines Doppel- oder Mehrfachgewindes erhöht die Insertionsgeschwindigkeit des Implantates, ohne dass sich der Abstand der jeweiligen Gewindezonen ändert. Mit einer solchen Abstimmung bleiben die physiologischen Vorteile der Gewindesteigung erhalten.

Vorteilhafterweise sind im zervikalen Bereich des Implantats, insbesondere am Implantathals, Vertiefungen angeordnet bzw. eingebracht, welche in radialer Umfangrichtung voneinander getrennt sind. Durch die Unterbrechung der Vertiefungen in radialer Richtung, d. h. es werden keine umfangsseitig durchgängigen Rillen gebildet. wird, wenn Knochengewebe in die Vertiefungen eingedrungen und/oder reingewachsen ist, eine Rotationssicherung des Dentalimplantats realisiert. Im Gegensatz zu zirkulär ununterbrochenen Rillen, die außer der Friktion mit dem Knochen keinen Rotationsschutz des Implantates bewirken, haben unterbrochene Strukturen den Vorteil einer weiteren mechanischen rotationshemmenden Verankerung.

Vorzugsweise sind am Implantathals derartige Strukturen realisiert, die gegenüber regelmäßig verteilt verbleibenden rahmenartigen Strukturen im Implantathals-Durchmesser Ausnehmungen bzw. Vertiefungen darstellen, in die sich dank des begrenzt elastischen Rückstellvermögens des Knochens dieser nach vorausgegangener Verdrängung wieder einlagert. Das Knochenlager wird in diesem Bereich im Durchmesser untermaßig aufbereitet, so dass bei Insertion des Halsbereiches des Implantates dort eine leichte Verdrängung stattfindet und der Knochen sich nach Abschluss der Implantatinsertion, d. h. bei Stillstand der Rotation, durch das Rückstellvermögen in die Vertiefungen einlagert, somit Retention bietet und die Primärstabilität erhöht.

Im weiteren Verlauf der Implantateinheilung ermöglichen diese Vertiefungen des Weiteren die Einblutung in diesen Bereich und damit Osteoblastenaktivität und die folgende Ossifikation.

Die Anbringung der beschriebenen Elemente kann im Bereich des Implantathalses in mehreren Ausführungen, erfolgen, beispielsweise aber nicht ausschließlich in Form schmaler länglicher Vertiefungen, rund, ellipsoid, rhomboid oder viereckig. Sie können zirkulär um den Implantathals in einer oder mehreren Reihen angebracht werden.

Eine ausgewogene Verteilung über Umfang und Höhe des Implantathalses wird dabei im Hinblick auf die möglichen unterschiedlichen Qualitäten des Knochens in diesen Bereichen als vorteilhaft erachtet.

Insbesondere in Kombination mit der beschriebenen Kombination aus Schneide-und Verdichtungsstrukturen kann eine hohe Primärstabilität erzielt werden, da alle auf das Implantat einwirkenden Kräfte bzw. Momente sowohl im Bereich des Gewindes als auch im Bereich des Implantathalses verteilt bzw. weitergeleitet werden können und rotatorischen Bewegungen des inserierten Implantates unter Belastung entgegenwirken. Darüber hinaus werden sowohl am Implantathals als auch im Bereich des Implantatgewindes eine Integration des Implantats in Knochen auf sanfte Art ermöglicht. Der Knochen wird nicht einfach, wie bei selbstschneidenden Implantaten, weggeschnitten bzw. weggeschreddert, wodurch Knochenzellen bzw. Rückstellungen zerstört werden. Vielmehr wird die Elastizität des Knochens ausgenutzt, der nach außen sowie in die Gewindegänge verdrängt wird, dem Implantat zunächst Primärstabilität gibt und dann im weiteren Heilungsverlauf das Implantat organisch integrieren kann.

Aufgrund der speziellen beschriebenen Hauptgewindegeometrie, die beim Eindrehen eine degressive Verdrängung und bedarfsweise beim Zurückdrehen ein bedarfsgemäßes Schneiden des Knochens ermöglicht, kann unterdimensioniert vorgebohrt werden, was die beschriebenen Effekte der koronalen anti-rotatorischen Elemente bei der Insertion und später das organische Einwachsen des Knochens in die Vertiefungen im koronalen Bereich erst ermöglicht.

Die Kombination der beschriebenen Merkmale des Gewindebereichs des Implantates und des Implantathalses, nämlich die Ausgestaltung als verdrängend/schneidendes Hauptgewinde und der zirkulär unterbrochenen Geometrie am Implantathals, sind als besonders vorteilhaft anzusehen, da sie beide mit den vorausgehend beschriebenen sich ergänzenden Effekten synergistisch zur Erzielung einer hohen Primärstabilität bei der Insertion des Implantates beitragen.

In einer bevorzugten Ausführung sind die Vertiefungen als radial verlaufende Kerben ausgebildet. Grundsätzlich sollten sich die radialen Kerben in einer bis mehreren versetzten Reihen befinden, wobei die Aufteilung nach dem jeweiligen Implantatdurchmesser unterschiedlich sein kann. Damit der koronale Hals nicht zu sehr in seinem Querschnitt geschwächt wird, sollte die Kerbentiefe zwischen 0,08 mm und 0,15 mm und die Kerbenhöhe zwischen 0,20 mm bis 0,40 mm betragen. Die Anzahl der Kerben richtet sich nach dem Halsdurchmesser, wobei der radiale Abstand der nicht gekerbten Zone zwischen 0,10 mm und 0,30 mm beträgt. Damit ergibt sich z. B. bei einem Halsdurchmesser von Ø 4,7 mm eine Anzahl von 9 Kerben.

Vorteilhafterweise sind die Vertiefungen bzw. Kerben in mehreren, insbesondere paarweise radial versetzten, Zonen, insbesondere Reihen, angeordnet, wodurch die rotatorische Kraftkompensation noch verbessert wird. Da der Knochen in der Regel Zonen unterschiedlicher Qualität aufweist, wird so eine besonders gleichmäßige Verteilung der antirotatorisch wirkenden Merkmale auf die entsprechenden Knochenareale erzielt. Weiterhin ist die mechanische Stabilität des Implantathalses durch die versetzte Aufteilung erhöht.

In einer alternativen bevorzugten Ausführungsform sind die Vertiefungen als rhombische Vertiefungen ausgebildet. Die rhombische Ausgestaltung mit größeren, glatten, rhombioden zirkulär unterbrochenen Ausnehmung ermöglicht eine leichtere Reinigung dieses Bereiches mittels geeigneter Instrumente, z. B. Scaler oder Küretten, in Fällen, wo diese aus individuellen medizinischen Gründen nicht vom Knochen bedeckt sind.

Bevorzugt sind die rhombischen Vertiefungen geneigt zu einer Mittelachse des Dentalimplantates angeordnet. Die seitliche Neigung der Rhomben ist in Bezug auf die Implantatachse bzw. Mittelachse des Dentalimplantats, bezogen auf die Drehrichtung des Implantates (Gewindeeinschraubrichtung) bei der Insertion, von vorn-unten schräg nach hinten-oben (koronal) ansteigend, vorzugsweise bei einem im Uhrzeigersinn einzudrehenden Implantat von links unten schräg nach rechts oben(koronal) verlaufend. Dadurch wird beim Eindrehen durch die Friktion der die Ausnehmungen begrenzenden Stege mit dem Knochen eine nach unten (apikal) gerichtete Bewegung des Implantates bei der Insertion unterstützt.

Die Vertiefungen sind vorteilhafterweise zwischen 0,08 mm und 0,15 mm, insbesondere 0,11 mm tief. Die Vertiefungen dürfen nicht zu tief sein, um die mechanische Stabilität des Implantathalses weiter zu erhalten. Zu tiefe Kerben würden den Querschnitt des Implantates in der am höchsten belasteten Zone stark schwächen, da sich durch die Querschnittsverkleinerung das Widerstandsmoment des Implantatkörpers in der Zone verringern würde und damit auch die Biegefestigkeit sinken würde. Weiter würden tiefe Kerben das Implantat zusätzlich bruchempfindlicher machen, da die Kerbwirkung von tiefen Kerben nachteilig ist.
Mit den ermittelten Werten konnte eine vorteilhafte Lösung gefunden werden.

In einer alternativen Variante betrifft die Erfindung ein Dentalimplantat mit einer prothetischen Schnittstelle in seinem zervikalen Bereich, einem Kern und mindestens einem Gewinde, das sich von dem zervikalen Bereich zu einem gegenüberliegenden apikalen Bereich erstreckt, wobei im zervikalen Bereich, insbesondere am Implantathals, Vertiefungen angeordnet sind, welche in radialer Umfangrichtung voneinander getrennt sind, beispielsweise, aber nicht ausschließlich, in Form schmaler länglicher Vertiefungen, rund, ellipsoid, rhomboid oder viereckig.

Vorteilhafterweise sind die Vertiefungen in mehreren Zonen, insbesondere paarweise radial versetzten Reihen, angeordnet.

In einer bevorzugten Ausführungsform sind die Vertiefungen als radial verlaufende Kerben ausgebildet.

In einer weiteren bevorzugten Ausführungsform sind die Vertiefungen als rhombische Vertiefungen ausgebildet sind.

Bevorzugt sind die rhombischen Vertiefungen geneigt zu einer Mittelachse des Dentalimplantates angeordnet.

Die Vertiefungen sind bevorzugt zwischen 0,08 mm und 0,15 mm, insbesondere 0,11 mm tief.

Die im Zusammenhang mit dem weiter oben beschriebenen Implantat mit Ausnehmungen genannten Vorteile der Vertiefungen betreffen, wo anwendbar, auch diese Variante der Erfindung.

Die Vorteile der Erfindung liegen insbesondere darin, dass ein Dentalimplantat bereitgestellt wird, welches sich aufgrund seiner Schneid- und Verdichtungsstrukturen besonders für die Sofortversorgung eignet und zuverlässige Primärstabilität liefert.

Ein bevorzugtes Ausführungsbeispiel der Erfindung wird nachstehend anhand einer Zeichnung näher erläutert. Darin zeigen in stark schematisierter Darstellung:
- FIG. 1: ein dentales Implantat in einer ersten bevorzugten Ausführungsform;
- FIG. 2: ein dentales Implantat in einer zweiten bevorzugten Ausführungsform;
- FIG. 3: das dentale Implantat gemäß FIG. 2 mit eingezeichneter Außenkontur;
- FIG. 4: das dentale Implantat gemäß FIG. 2 mit eingezeichneter Gewindekernkontur;
- FIG. 5: das dentale Implantat gemäß FIG. 2 in einem vertikalen Schnitt mit Blick von apikal nach koronal;
- FIG. 6: eine Ausschnittsvergrößerung aus FIG. 5;
- FIG. 7: das dentale Implantat gemäß FIG. 2 mit eingezeichnetem Ausschnitt;
- FIG. 8: den Ausschnitt aus FIG. 7;
- FIG. 9: das Dentalimplantat gemäß FIG. 2 mit fünf eingezeichneten Schnitten;
- FIG. 10: den Schnitt mit Nummer 1 aus FIG. 9;
- FIG. 11: den Schnitt mit Nummer 2 aus FIG. 9;
- FIG. 12: den Schnitt mit Nummer 3 aus FIG. 9;
- FIG. 13: den Schnitt mit Nummer 4 aus FIG. 9;
- FIG. 14: den Schnitt mit Nummer 5 aus FIG. 9;
- FIG. 15: einen Schnitt durch das Dentalimplantat gemäß FIG. 2;
- FIG. 16: einen Ausschnitt aus FIG. 15;
- FIG. 17: einen Schnitt durch das Dentalimplantat gemäß FIG. 2;
- FIG. 18: ein dentales Implantat in einer weiteren bevorzugten Ausführungsform mit eingezeichnetem Schnitt;
- FIG. 19: den Schnitt aus FIG. 18;
- FIG. 20: ein dentales Implantat in einer weiteren bevorzugten Ausführungsform mit eingezeichnetem Schnitt;
- FIG. 21: den Schnitt aus FIG. 20;
- FIG. 22: ein dentales Implantat in einer weiteren bevorzugten Ausführungsform mit eingezeichnetem Schnitt, und
- FIG. 23: den Schnitt aus FIG. 22.

Gleiche Teile sind in allen Figuren mit denselben Bezugszeichen versehen.

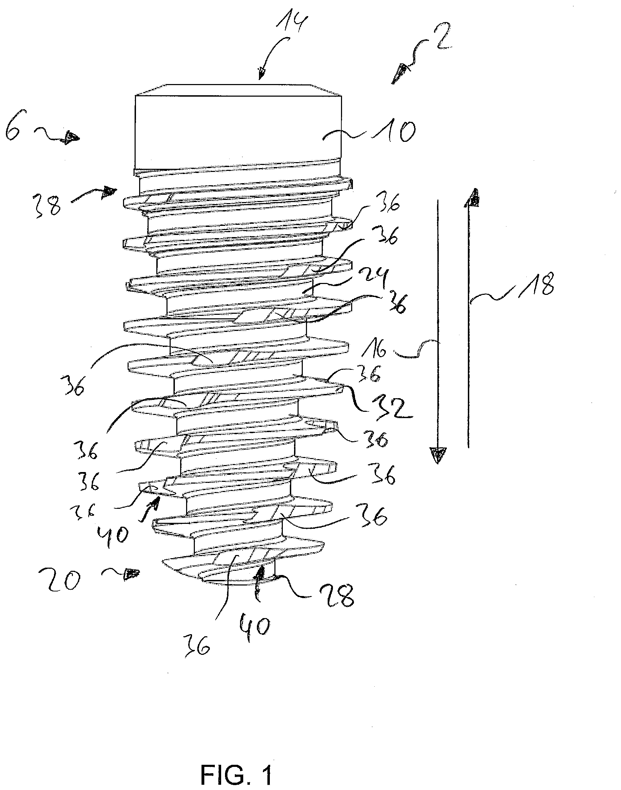

Ein in FIG. 1 dargestelltes dentales Implantat bzw. Dentalimplantat 2 umfasst in einem zervikalen Bereich 6 einen Implantathals 10 mit einer prothetischen Schnittstelle 14. Vom zervikalen Bereich 6 zum apikalen Bereich 20 in apikaler Richtung 16 (entgegengerichtet dazu ist die koronale Richtung 18) verläuft ein Kern 24 des Implantats, welcher im apikalen Bereich 20 in eine Implantatspitze 28 zuläuft. Das Dentalimplantat 2 weist ein als Außengewinde ausgebildetes Gewinde 32 auf. Das Gewinde 32 weist eine Mehrzahl von Ausnehmungen 36 auf. Die Ausnehmungen 36 bilden drei kanalförmige Spanräume 40 im Gewinde 32, die in dem dargestellten Ausführungsbeispiel jeweils eine radiale Steigung von 15 mm pro Umdrehung aufweisen. Der jeweilige kanalförmige Spanraum 40 erstreckt sich von der Implantatspitze 28 zu einem Gewindeauslauf 38.

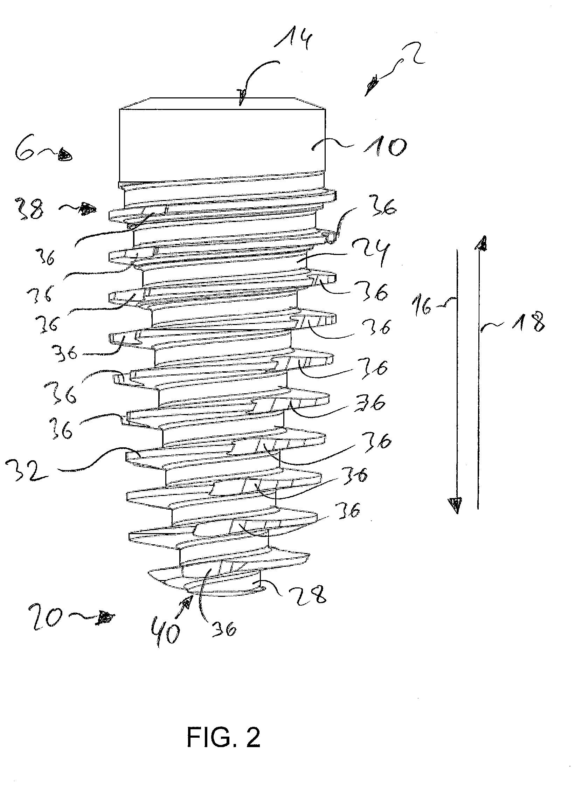

In FIG. 2 ist ein Dentalimplantat 2 in einer weiteren Ausführungsform dargestellt. Das Dentalimplantat gemäß FIG. 2 unterscheidet sich von dem Dentalimplantat 2 gemäß FIG. 1 durch die radiale Steigung der kanalförmigen Spanräume 40, die in dem in FIG. 2 dargestellten Dentalimplantat 2 30 mm pro Umdrehung beträgt.

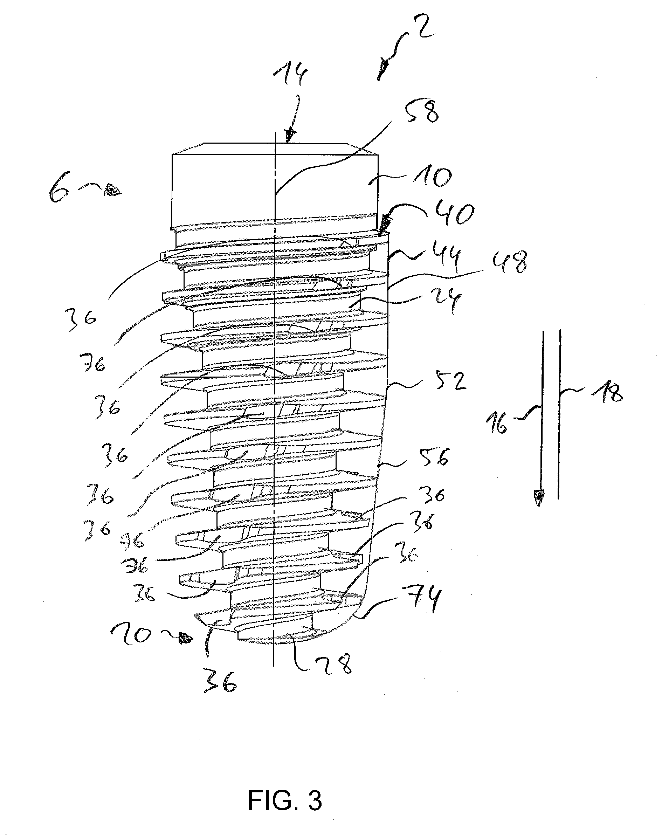

In FIG. 3 ist das Dentalimplantat 2 gemäß FIG. 2 in gegenüber FIG. 2 rotierter Position dargestellt, wobei auf der rechten Seite eine Gewindeaußenkontur 44 eingezeichnet ist. Das Gewinde 32 weist in einem ersten Gewindebereich 48, der an den zervikalen Bereich 6 angrenzt, eine im Wesentlichen konstante Außenkontur auf, was bedeutet, dass die radiale Ausdehnung des Gewindes 32 in diesem Bereich im Wesentlichen konstant ist. In einem zweiten Gewindebereich 52, der sich an den ersten Gewindebereich 48 in Richtung der Implantatspitze 28 anschließt, geht die konstante Außenkontur in einem Übergang in einen sich anschließenden dritten Gewindebereich 56 über, in dem sich die Außenkontur in Richtung der Implantatspitze 28, insbesondere konisch, verjüngt.

In einem sich daran anschließenden vierten Gewindebereich 74 erfolgt eine starke Verjüngung der Außenkontur hin zur Implantatspitze 28. Damit lässt sich das Implantat vorteilhaft in anatomisch nachteilige Knochenbereiche einbringen (z. B. Extraktionsaveolen), da sich eine spitzere Form des apikalen Teils tiefer in eine vorgebohrte Knochenkavität einführen lässt und anschließend eine bessere Führung beim Einschrauben des Implantates erlaubt. Weiterhin dargestellt in FIG. 3 ist eine Mittelachse 58 des Dentalimplantats 2, welche im Wesentlichen eine Symmetrieachse des Kerns 24 darstellt.

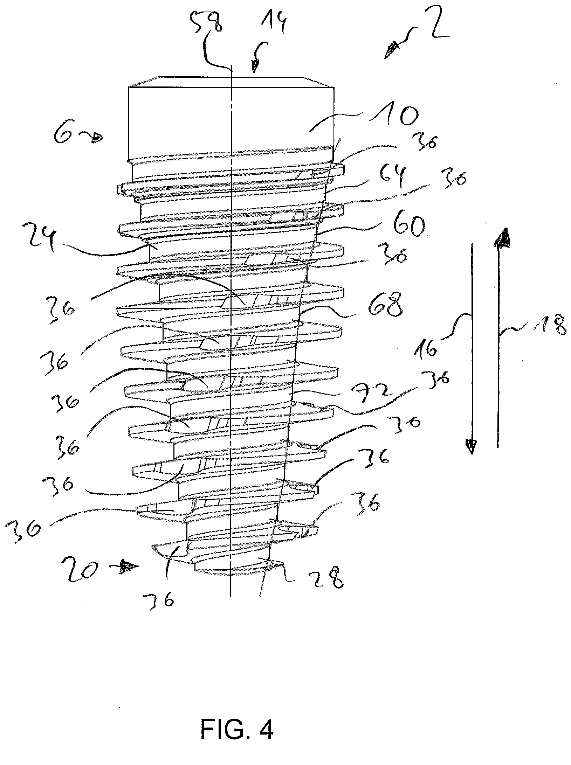

In FIG. 4 ist das Dentalimplantat 2 gemäß FIG. 3 mit eingezeichneter Kernaußenkontur 60 des Kerns 24, die entlang des Kernradius verläuft, dargestellt. Ausgehend von dem zervikalen Bereich 6 in Richtung des apikalen Bereichs verjüngt sich der Kerndurchmesser, insbesondere konisch, mit einer ersten Steigung. In einem sich in apikaler Richtung daran anschließenden zweiten Kernbereich 68 verändert sich die Steigung des Kerndurchmessers, sodass in einem sich in apikaler Richtung daran anschließenden dritten Kernbereich 72 der Kerndurchmesser weiter verjüngt, allerdings mit geringerer Steigung als im ersten Kernbereich. In apikaler Richtung verjüngt sich in dem dritten Kernbereich 72 der Kerndurchmesser mit gleicher Steigung oder mit zunehmender Steigung.

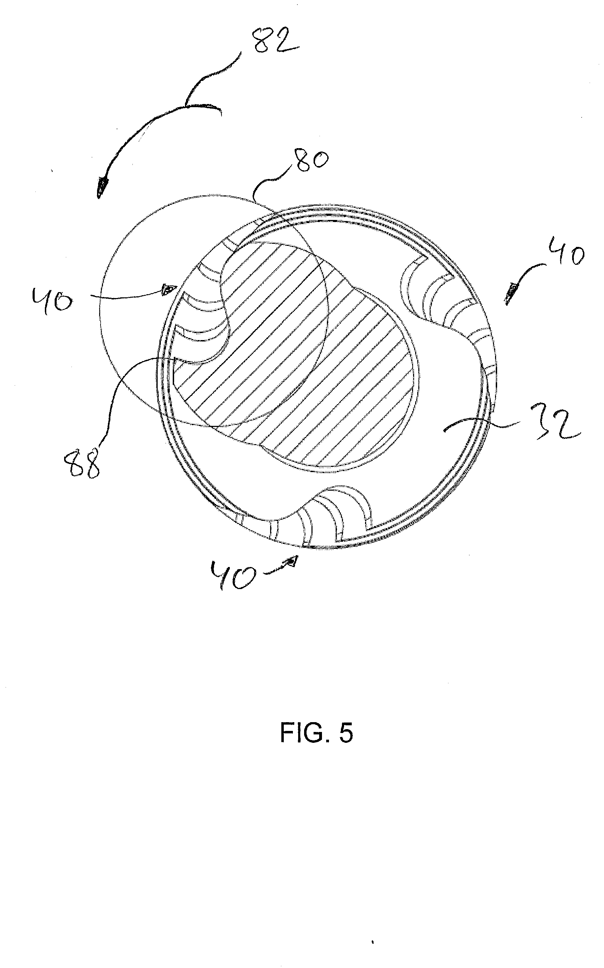

In FIG. 5 ist ein Schnitt durch das Implantat gemäß FIG. 2 dargestellt, ausgehend von der Implantatspitze 28 in Richtung des Implantathalses 10, also in koronaler Richtung 18. In dieser Abbildung sind die drei radial gewundenen kanalförmigen Spanräume 40, welche von den Ausnehmungen 36 im Gewinde 32 gebildet werden, gut erkennbar.

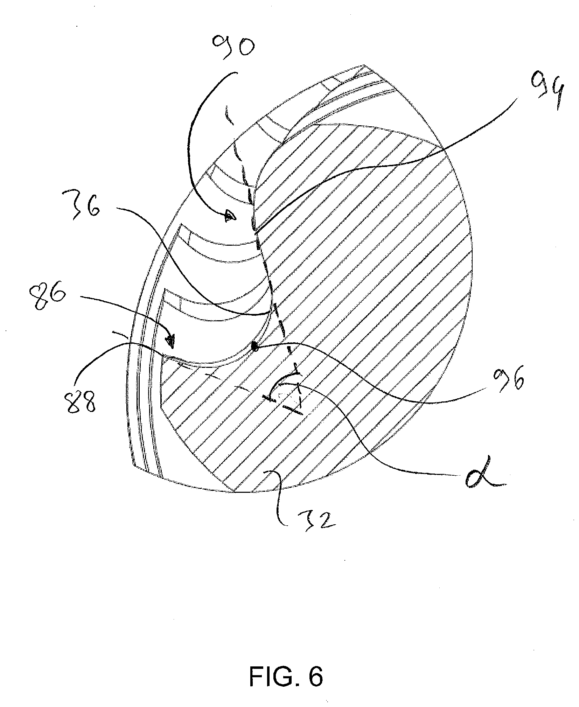

Ein Ausschnitt 80 aus FIG. 5 ist in FIG. 6 vergrößert dargestellt. Die jeweilige Ausnehmung 36 im Gewinde 32 weist einen Schneidbereich 86 auf, an dessen Rand am Umfang des Getriebes eine Schneidkante 88 ausgebildet ist. Benachbart zum bzw. angrenzend an den Schneidbereich 86 ist ein Verdichtungsbereich 90 angeordnet. Der Schneidbereich 86 und der Verdichtungsbereich 90 formen im Gewinde 32 eine im Wesentlichen S-förmige Kurve 94, die einer sinusförmigen Kontur ähnelt. Die radiale Ausdehnung der Ausnehmung entlang des Gewindeumfang bezeichnet die aktive Gewindezone bzw. Zone SU-A. Je breiter diese entlang des Umfangs ist, umso länger gezogen sind der Schneidbereich 86 und/oder der Verdichtungsbereich 90. Wichtig ist die für das vorteilhafte Verhältnis einen ausreichend passiven Bereich, um einen zuverlässigen Vorschub des Implantates beim Einschrauben sicherzustellen, bei gleichzeitig hoher und gewebeschonender Verdichtungsfunktion. Das Verhältnis aus passiver Gewindezone GU-A und aktiver Zone SU-A sollte apikal > 1 sein und nach koronal weiter ansteigen bis auf 6.

Der Verdichtungsbereich 90 ist gerundet ausgebildet und weist senkrecht zu der Mittelachse 58 des Dentalimplantats 2 gesehen von einem in radialer Richtung der Mittelachse 58 nächsten Punkt 96 maximaler Ausnehmungstiefe eine positive, monoton abnehmende Steigung auf.

Der Schneidbereich 86 ist gerundet ausgebildet ist und weist senkrecht zu der Mittelachse 58 des Dentalimplantats 2 gesehen von einem in radialer Richtung der Mittelachse 58 nächsten Punkt 96 maximaler Ausnehmung in Richtung der Schneidkante 88 eine positive, monoton abnehmende Steigung auf.

Ein Öffnungswinkel α der jeweiligen Ausnehmung 36 ist definiert als ein Winkel zwischen einer Tangente an den Rand des Schneidbereichs am Außenbereich des Gewindes 32 und einem Bereich der Kontur 94 im Verdichtungsbereich 90 mit im Wesentlichen gleichbleibender Steigung. Der Öffnungswinkel α ist im dargestellten bevorzugten Ausführungsbeispiel ein spitzer Winkel und beträgt im vorliegenden bevorzugten Ausführungsbeispiel 56°.

Beim Eindrehen des Dentalimplantats 2 in den Knochen in einer Insertionsdrehrichtung 82 wird der umliegende Knochen mit Hilfe des Verdichtungsbereiches 90 verdichtet. Die dargestellte gerundete Ausbildung des Verdichtungsbereiches 90 ermöglicht eine zunächst progressive, dann degressive und damit eine knochenfreundliche bzw. knochenschonende Verdichtung des Knochens. Eine Drehung um gleichen Winkel führt in einem ersten Schritt, wenn der Knochen noch weich und unverdichtet ist zu mehr Verdichtung als in einem anschließenden zweiten Schritt, wenn der Knochen bereits vorverdichtet ist. Beim Drehen des Dentalimplantats 2 entgegengesetzt zur Insertionsdrehrichtung 82 bzw. Insertionsrichtung schneidet die jeweilige Schneidkante 88 in das Knochengewebe.

Wie oben beschrieben, wird während der Einbringung des Dentalimplantats 2, während der es im Uhrzeigersinn gedreht wird, mit Hilfe des Verdichtungsbereiches 90 der Knochen zielgerichtet verdichtet bzw. kompaktiert / kompaktifiziert und gleichzeitig vertikal in die Zwischenräume des Gewindes 32 gedrückt. Wenn allerdings der Knochen nicht flexibel genug ist, sondern zu hart, würde ein zu hohes Drehmoment zum Eindrehen benötigt. In diesem Fall kann der Knochen für die weitere Insertion vorbereitet werden, indem er mit Hilfe der Schneidkanten 88 vorgeschnitten bzw. geschnitten wird, indem das Dentalimplantat 2 gegen den Uhrzeigersinn gedreht wird, insbesondere für ca. ein Drittel einer vollständigen Umdrehung.

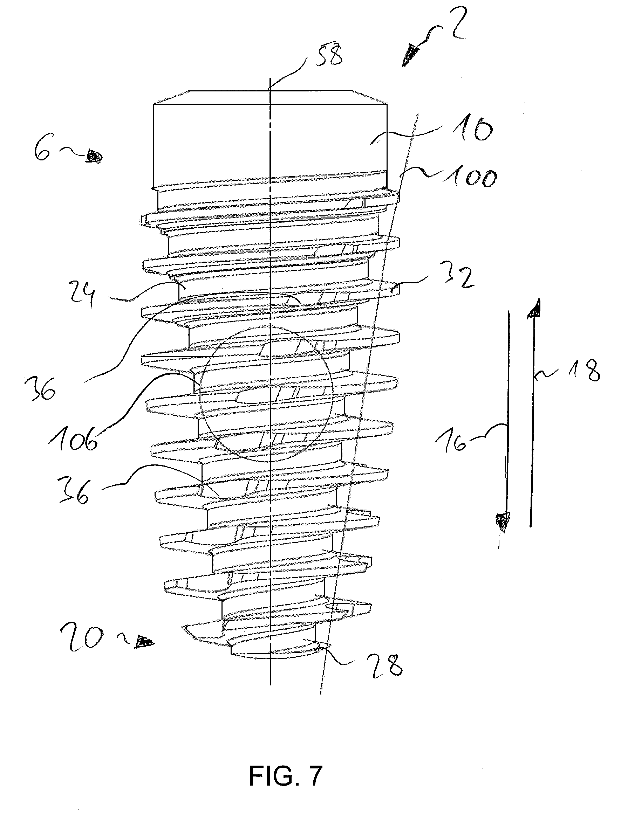

In FIG. 7 ist das Dentalimplantat gemäß FIG. 2 dargestellt mit einer Kanalkontur 100, die in einem Kanal 40 jeweils durch den radial innersten Punkt, also Punkt 96, einer Ausnehmung gezogen ist Hierbei ist erkennbar, dass in apikaler Richtung der tiefste Punkt der Ausnehmung (Punkt 96) näher an die Mittelachse rückt und nach koronal hin, der tiefste Punkt (Punkt 96) immer weniger tief liegt. Der Übersichtlichkeit halber sind in dieser und den anderen Figuren nicht immer alle Ausnehmungen mit dem Bezugszeichen 36 versehen.

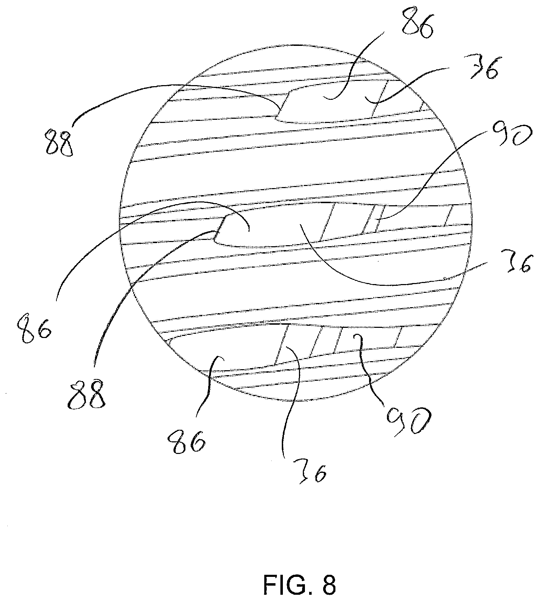

Ein Ausschnitt 106 aus FIG. 7 ist in FIG. 8 vergrößert dargestellt. Darin sind drei Ausnehmungen 36 mit den Schneidebereichen 86 und Verdichtungsbereichen 90 erkennbar.

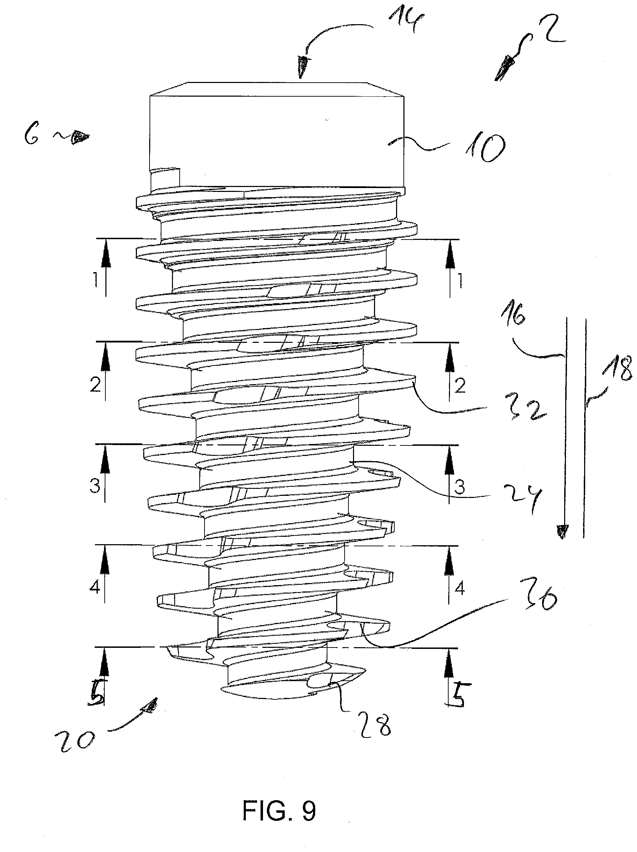

In FIG. 9 ist das Dentalimplantat 2 gemäß FIG. 2 dargestellt, wobei 5 verschiedene Schnitte eingezeichnet, die jeweils mit den Zahlen 1, 2, 3, 4, 5 gekennzeichnet sind. Die Schnitte mit den Zahlen 1 bis 5 sind in apikaler Richtung 16 angeordnet, sodass der Schnitt 1 am nächsten am Implantathals 10 durchgeführt ist und der Schnitt 5 am nächsten an der Implantatspitze 28 liegt.

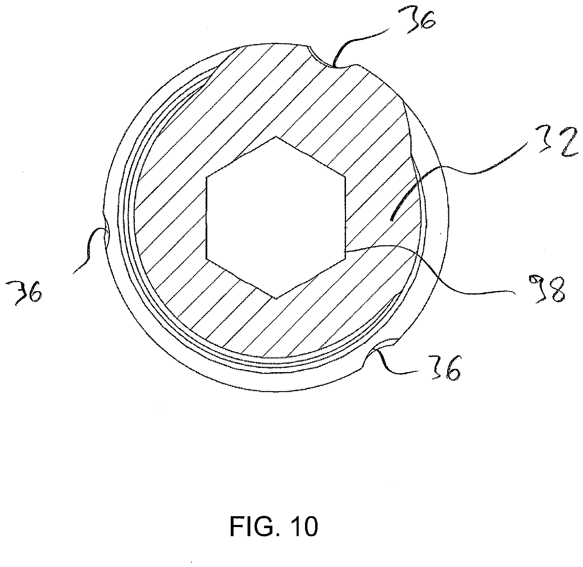

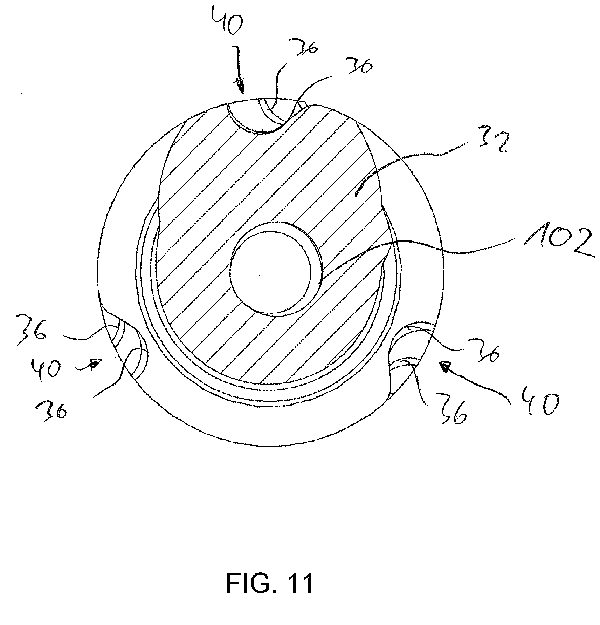

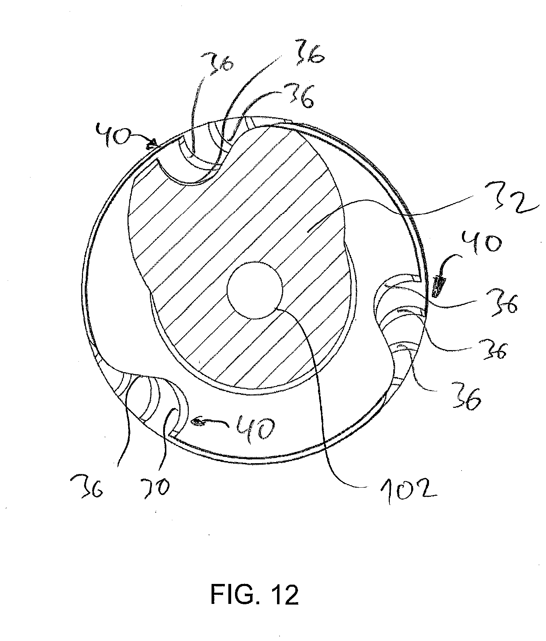

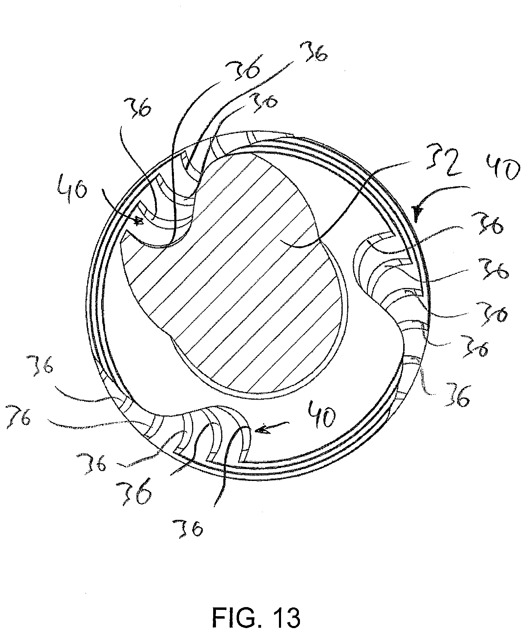

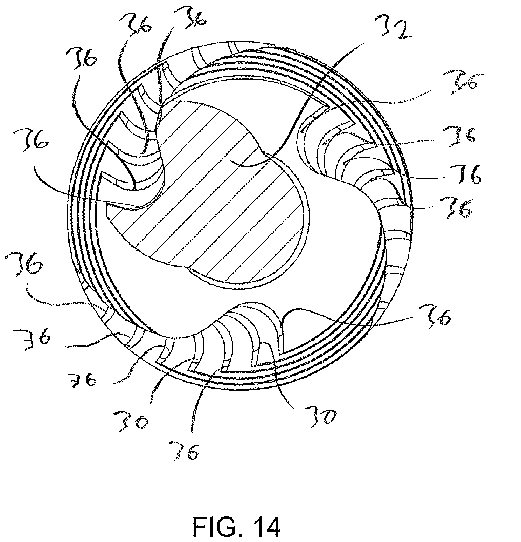

Die fünf Schnitte sind in den FIG. 10-14 dargestellt, Dabei zeigt FIG. 10 den Schnitt mit der Nummer 1, FIG. 11 den Schnitt mit der Nummer 2, FIG. 12 den Schnitt mit der Nummer 3, FIG. 13 den Schnitt mit der Nummer 4 und FIG. 14 den Schnitt mit der Nummer 5. In dem in FIG. 10 dargestellten ersten Schnitt 98 ist eine Implantatschnittstelle 98 für ein Abutment zu sehen, die als Sechskant ausgebildet ist. In den FIG. 11 und 12 (zweiter und dritter Schnitt) ist eine Bohrung im Kern 24 erkennbar.

Aus der Folge der Schnitte 1 bis 5 in den FIG. 10-14, ist erkennbar, dass die Ausnehmungen 36 in apikaler Richtung 16 gesehen tiefer werden. Sie haben die geringste Tiefe in Schnitt 1 und die größte Tiefe in Schnitt 5.

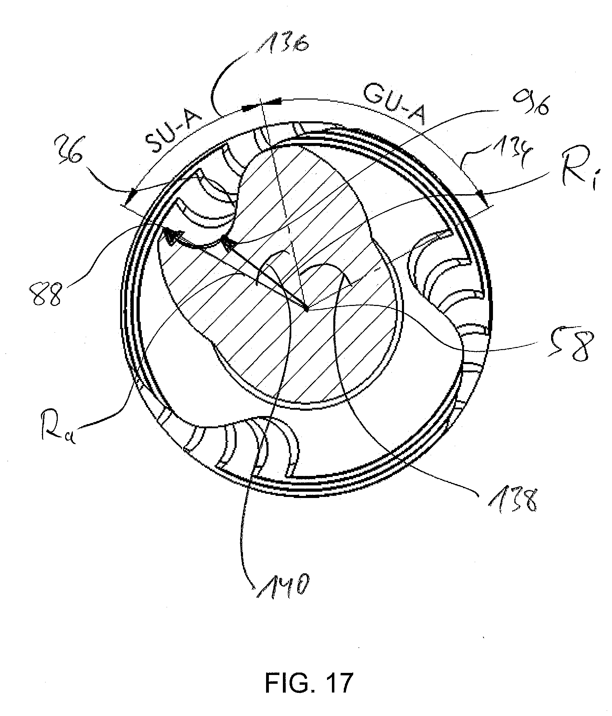

Diese Progression der Ausnehmungstiefe wird im Folgenden quantisiert mit Hilfe von zwei Radien Rₐ, Rᵢ, die in FIG. 17 eingezeichnet sind, die den vierten Schnitt bzw. den Schnitt mit der Nummer 4 darstellt. Der äußere Radius Rₐ misst radiale die Entfernung der Schneidkante 88 bzw. eines Punktes der Schneidkante 88 zur Mittelachse 58 des Dentalimplantats 2 (maximaler Schneidenradius). Der innere Radius Rᵢ misst die radiale Entfernung des Punktes 96 zur Mittelachse 58 des Dentalimplantats 2 (maximale Ausnehmungstiefe).

Die minimale/maximale Tiefe der Ausnehmungen 36 liegt in dem dargestellten Ausführungsbeispiel zwischen 0,0 mm und 0,80 mm. Dabei bezeichnet die minimale/maximale Tiefe hier im Wesentlichen die Differenz der beiden Radien Rₐ und Rᵢ. Das Verhältnis zwischen maximalem Schneidenradius (Rₐ) und maximaler Ausnehmungstiefe (Ri) bezogen auf die Implantatmittelachse bzw. Mittelachse 58 des Dentalimplantats liegt zwischen apikal 1,7 bis koronal 1,0.

Die nachfolgende Tabelle zeigt die beiden Radien Rₐ und Rᵢ und das Verhältnis Rₐ/Rᵢ für das in FIG. 9 dargestellte Dentalimplantat 2.

| Schnitt-Nummer | Rₐ | Rᵢ | Rₐ/Rᵢ |
|---|---|---|---|
| 1 | 2,60 | 2,39 | 1,09 |
| 2 | 2,60 | 2,07 | 1,25 |
| 3 | 2,46 | 1,79 | 1,38 |
| 4 | 2,29 | 1,52 | 1,50 |
| 5 | 2,01 | 1,24 | 1,62 |

Wie aus der Tabelle erkennbar ist, nehmen beide Radien im Wesentlichen in apikaler Richtung 16 ab, und das Verhältnis zwischen Rₐ und Rᵢ nimmt in apikaler Richtung 16 zu.

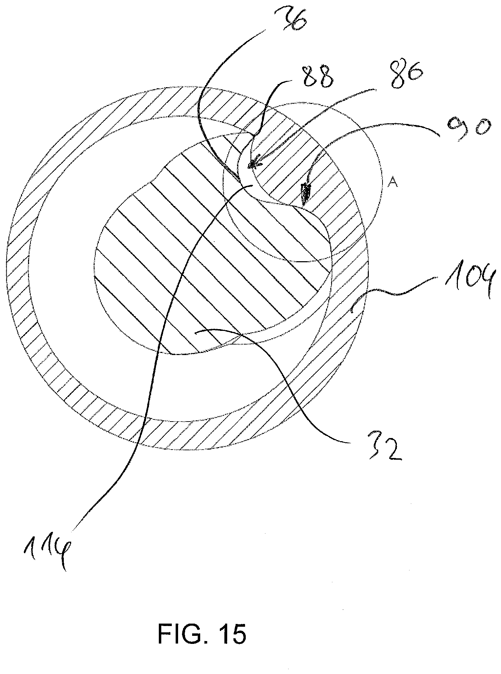

In FIG. 15 ist ein Schnitt (Schnitt 4, siehe FIG. 13) durch das Dentalimplantat 2 dargestellt. Dargestellt ist weiterhin schematisch das das Dentalimplantat 2 umgebende Knochengewebe 104 sowie ein knochengewebsfreier Raum 114 in der Ausnehmung 36. Die Darstellung der FIG. 15 zeigt das Dentalimplantat 2 in einem zumindest teilweise eingedrehten Zustand im Kieferknochen.

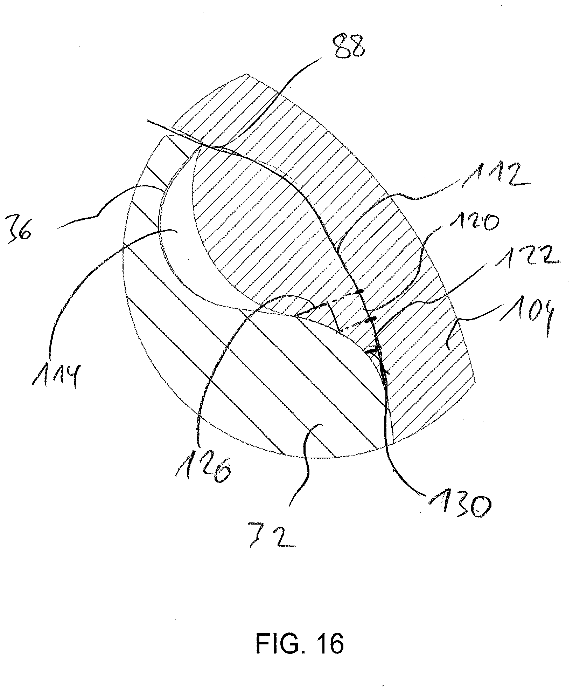

In FIG. 16 ist der in FIG. 15 gekennzeichnete Ausschnitt vergrößert dargestellt. Entlang einer gedachten Umfangslinie 112 des Gewindes 32, eine erste Bogensegmentlänge 120 und eine zweite Bogensegmentlänge 122 eingezeichnet, die beide gleich lang sind. Zur ersten Bogensegmentlänge 120 korrespondiert eine erste Tiefe 126; zur zweiten Bogensegmentlänge 122 korrespondiert eine zweite Tiefe 130. Die beiden Tiefen 126, 130 sind jeweils definiert als maximaler Abstand einer Linie zum Verdichtungsbereich 90, die im Wesentlichen parallel zu der jeweiligen Bogensegmentlänge 120, 122 verläuft, deren Länge im Wesentlichen der jeweiligen Bogensegmentlänge 120, 122 entspricht und die an ihrem dem Schneidbereich 86 abgewandten Ende das Gewinde berührt bzw. dort startet.

Wie mit Hilfe der FIG. 16 erkennbar ist, führt die gleiche Bogensegmentlänge 120, 122 in einem ersten Schritt (Tiefe 126) beim Eindrehen des Dentalimplantats 2 in den Kieferknochen zu stärkerer Verdichtung bzw. Kompaktierung des Knochengewebes 104 als in einem nachfolgenden zweiten Schritt (Tiefe 130), wenn das Knochengewebe 104 bereits vorkompaktifiziert ist. Beim Eindrehen des Dentalimplantats 2 in den Knochen folgt in dem jeweiligen Knochengewebe der erste Schritt vor dem zweiten Schritt. Dadurch wird eine degressive Kompaktierung des Knochengewebes 104 erzielt.

Das Dentalimplantat 2 ist ausgebildet, einen zuverlässigen Vorschub beim Einschrauben sicherzustellen, bei gleichzeitig hoher und gewebeschonender Verdichtungsfunktion. Dazu ist ein ausreichend passiver Bereich vorgesehen, der einer passiven Gewindezone GU-A entspricht. Die passive Gewindezone GU-A entspricht in einem Bereich des Gewindes 32 in Umfangrichtung, in der keine Ausnehmung 36 vorhanden ist. Die passive Gewindezone GU-A hat einen ersten Umfangsanteil 134 und einen ersten Öffnungswinkel 138. Die aktive Gewindezone SU-A entspricht einem Bereich des Gewindes 32 in Umfangrichtung, in der eine Ausnehmung 36 vorhanden ist. Die aktive Gewindezone SU-A hat einen zweiten Umfangsanteil 136 und einen ersten Öffnungswinkel 140. Beide Zonen können jeweils durch den entsprechenden Öffnungswinkel 138, 140 bzw. die umfangsseitig überstrichene Bogenlänge bzw. den Umfangsanteil charakterisiert werden. Das Verhältnis aus passiver Gewindezone GU-A und aktiver Zone SU-A ist vorteilhaft > 1 sein und steigt in koronaler Richtung 18 bis auf 6 an.

Die folgende Tabelle zeigt jeweils für die Schnitte 1 bis 5 gemäß FIG. 9 den Spanraumumfanganteil der aktiven Zone SU-A als Öffnungswinkel in Grad und Umfangsanteil in mm und den Gewindeumfangsanteil als Öffnungswinkel in Grad und Umfangsanteil in mm. In der letzten Spalte ist jeweils das Verhältnis der beiden Winkel bzw. Umfangsanteile gegeben.

| Schnitt-Nummer | SU-A Öffnungswinkel | SU-A Umfangsanteil | GU-A Öffnungswinkel | GU-A Umfangsanteil | Verhältnis |
|---|---|---|---|---|---|
| 1 | 18,63 | 0,27 | 104,88 | 1,52 | 5,63 |
| 2 | 31,99 | 0,46 | 90,52 | 1,31 | 2,83 |
| 3 | 41,63 | 0,57 | 80,56 | 1,10 | 1,94 |
| 4 | 48,34 | 0,61 | 73,67 | 0,93 | 1,52 |
| 5 | 47,98 | 0,54 | 74,64 | 0,83 | 1,56 |

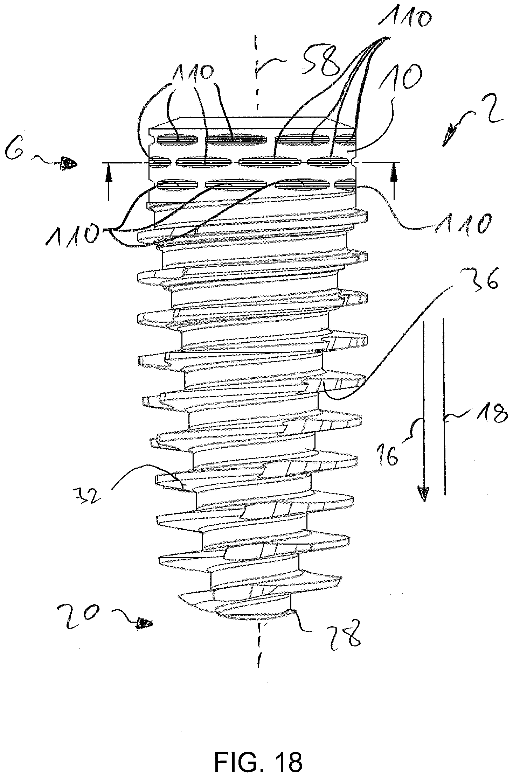

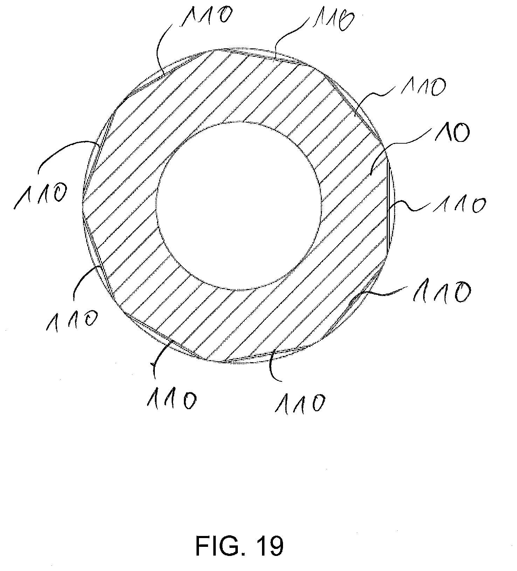

In FIG. 18 ist ein Dentalimplantat 2 in einer weiteren bevorzugten Ausführungsform dargestellt. Im zervikalen Bereich 6 des Dentalimplantats, vorliegend im Implantathals 10, sind Vertiefungen 110 eingebracht, in denen die radiale Ausdehnung des Implantathalses 10 bereichsweise verringert ist. Ein in FIG. 18 dargestellter Schnitt ist in FIG. 19 dargestellt, in dem die bereichsweise radiale Verringerung des Implantathalses 10 erkennbar ist. Im dargestellten Ausführungsbeispiel haben die Vertiefungen 110 eine, insbesondere maximale, Tiefe von 0,11 mm.

Wie in FIG. 18 erkennbar ist, sind die Vertiefungen 110, die insbesondere als Micro Pits ausgebildet sind, in drei Reihen in axialer Richtung (entlang der Mittelachse 58 des Dentalimplantats gesehen) angeordnet. Dabei überlappen in Projektion parallel zur axialen Richtung bzw. Mittelachse 58 Vertiefungen aus 110 aus zwei benachbarten Reihen nur teilweise.

Die Vertiefungen 110 dürfen nicht zu tief sein, um die mechanische Stabilität des Implantathalses 10 weiter zu erhalten. Zu tiefe Kerben würden den Querschnitt des Dentalimplantates 2 in der am höchsten belasteten Zone stark schwächen, da sich durch die Querschnittsverkleinerung das Widerstandsmoment des Implantatkörpers bzw. Kern 24 in der Zone verringern würde und damit auch die Biegefestigkeit sinken würde. Weiter würden tiefe Kerben das Dentalimplantat 2 zusätzlich bruchempfindlicher machen, da die Kerbwirkung von tiefen Kerben nachteilig ist.

Da der Knochen in der Regel Zonen unterschiedlicher Qualität aufweist, wird auf diese Weise eine besonders gleichmäßige Verteilung der antirotatorisch wirkenden Merkmale auf die entsprechenden Knochenareale erzielt. Weiterhin ist die mechanische Stabilität des Implantathalses 10 durch die versetzte Aufteilung erhöht.

Während konventionelle Rillen im zervikalen Bereich 6 eines Dentalimplantats 2 nur eine geringe Rotationshemmung in weichem Knochen aufweisen, erlauben die beschriebenen Vertiefungen 110 das Hineindringen bzw. Hineinwachsen von Knochengewebe, wodurch eine Rotationshemmung erzielt wird. Dies ist vorteilhaft da Kaubewegungen auf zueinander geneigten Flächen auch Rotations- bzw. Drehkräfte in das Implantat bzw. Dentalimplantat 2 einleiten.

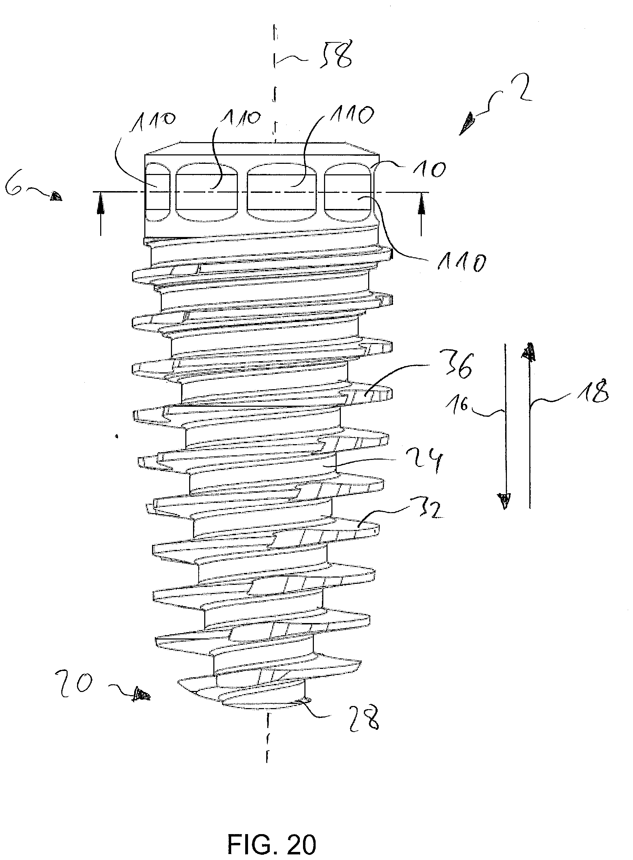

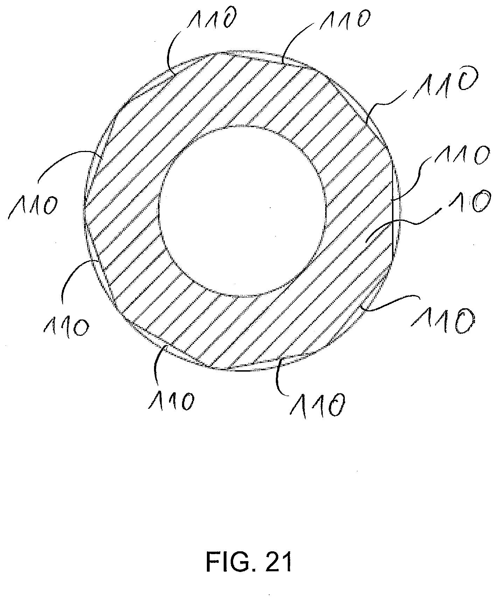

Ein Dentalimplantat 2 in einer weiteren bevorzugten Ausführungsform ist in FIG. 20 dargestellt, wobei ein Schnitt durch das Dentalimplantat 2 in FIG. 21 dargestellt ist. Das Dentalimplantat 2 gemäß FIG. 20 weist rhombische Vertiefungen 110 auf. Die Symmetrieachsen der rhombischen Vertiefungen sind parallel bzw. senkrecht zur Mittelachse 18 des Dentalimplantats 2.Die rhombische Ausgestaltung mit größeren glatten Rhombioden zirkulär unterbrochenen Ausnehmung ermöglicht eine leichtere Reinigung dieses Bereiches mittels geeigneter Instrumente, z. B. Scaler oder Küretten, in Fällen, wo diese aus individuellen medizinischen Gründen nicht vom Knochen bedeckt sind.

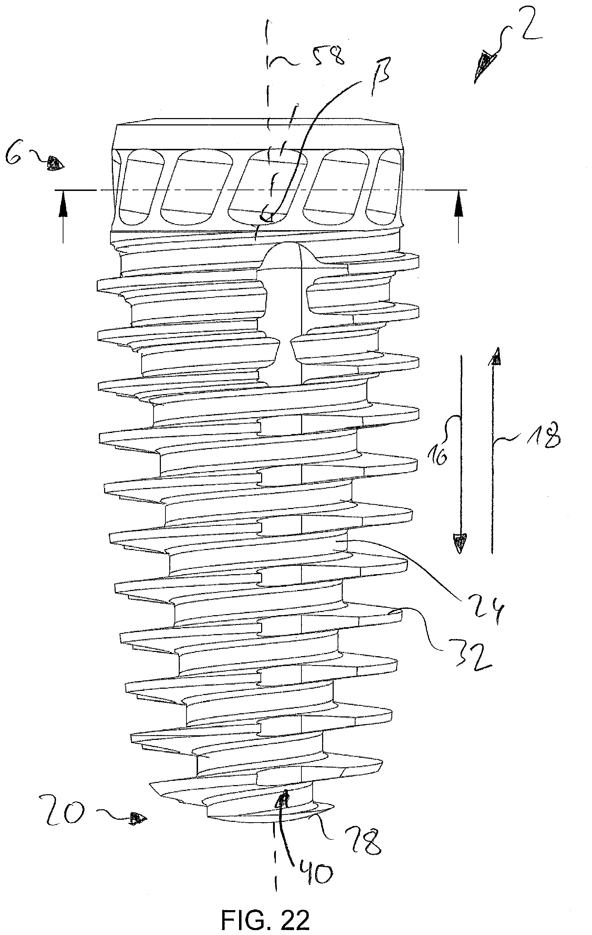

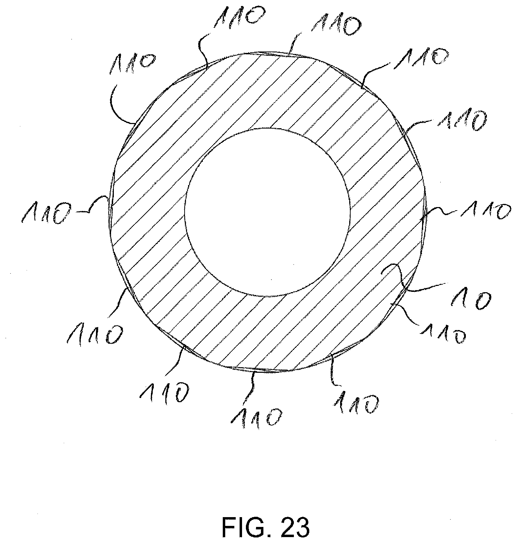

Ein Dentalimplantat 2 in einer weiteren bevorzugten Ausführungsform ist in FIG. 22 dargestellt, wobei ein Schnitt durch das Dentalimplantat 2 aus gemäß FIG. 22 in FIG. 23 dargestellt ist. Das Dentalimplantat 2 gemäß FIG. 23 weist rhombische Vertiefungen 110 auf. Die längere Symmetrieachse der rhombischen Vertiefungen weisen zur Mittelachse 58 des Dentalimplantats 2 einen Winkel β auf, der bevorzugt zwischen 5° und 30° liegt.

Die seitliche Neigung der Rhomben bzw. rhombischen Vertiefungen 110 ist in Bezug auf die Implantatachse bzw. Mittelachse 58 des Dentalimplantats vorzugsweise von links unten schräg nach rechts oben verlaufend, um beim Eindrehen des Dentalimplantats 2 im Uhrzeigersinn, durch die Friktion der die Ausnehmungen begrenzenden Stege mit dem Knochen, eine nach unten (apikal) gerichtete Bewegung des Dentalimplantates 2 bei der Insertion zu unterstützen.

Bei dem in FIG. 22 dargestellten Dentalimplantat 2 verlaufen die kanalförmigen Spanräume 40 parallel zur Mittelachse 58. Die in den FIG. 18-23 dargestellten Ausführungen des Implantathalses 10 mit Vertiefungen 110 sind auch mit den dargestellten Implantatvarianten mit schräg verlaufenden bzw. radial gewundenen kanalförmigen Spanräumen 40 kombinierbar und von der Erfindung miterfasst.

### Bezugszeichenliste

- 2: Dentalimplantat
- 6: zervikaler Bereich
- 10: Implantathals
- 14: prothetische Schnittstelle
- 16: apikale Richtung
- 18: koronale Richtung
- 20: apikaler Bereich
- 24: Kern
- 28: Implantatspitze
- 32: Gewinde
- 36: Ausnehmung
- 38: Gewindeauslauf
- 40: kanalförmiger Spanraum
- 44: Gewindeaußenkontur
- 48: erster Gewindebereich
- 52: zweiter Gewindebereich
- 56: dritter Gewindebereich
- 58: Mittelachse
- 60: Kernaußenkontur
- 64: erster Kernbereich
- 68: zweiter Kernbereich
- 72: dritter Kernbereich
- 74: dritter Gewindebereich
- 80: Ausschnitt
- 82: Insertionsdrehrichtung
- 86: Schneidbereich
- 88: Schneidkante
- 90: Verdichtungsbereich
- 94: S-förmige Kurve
- 96: Punkt
- 98: Implantatschnittstelle
- 100: Kanalkontur
- 102: Bohrung
- 104: Knochengewebe
- 106: Ausschnitt
- 110: Vertiefung
- 112: Umfangslinie
- 114: knochengewebsfreier Raum
- 120: erste Bogensegmentlänge
- 122: zweite Bogensegmentlänge
- 126: erste Tiefe
- 130: zweite Tiefe
- 134: erster Umfangsanteil
- 136: zweiter Umfangsanteil
- 138: erster Öffnungswinkel
- 140: zweiter Öffnungswinkel

- α: Öffnungswinkel
- β: Winkel
- GU-A: passive Gewindezone
- SU-A: aktive Gewindezone

## Patentansprüche

1. Dentalimplantat (2) mit einer prothetischen Schnittstelle (14) in seinem zervikalen Bereich (6), einem Kern (26) und mindestens einem Gewinde (32), das sich von dem zervikalen Bereich (6) zu einem gegenüberliegenden apikalen Bereich erstreckt (20), wobei das Gewinde (32) Ausnehmungen aufweist (36), an welchen eine Schneidkante (88) zum Schneiden von Knochen angeordnet ist, die jeweilige Schneidkante (88) in Drehrichtung (82) des Dentalimplantates (2) bei der Insertion gesehen an der Rückseite der Ausnehmung (36) angeordnet ist,
wobei
die jeweilige Ausnehmung (36) einen Schneidbereich (86) aufweist, an welchem die Schneidkante (88) angeordnet ist und einen an den Schneidbereich (86) angrenzenden Verdichtungsbereich (90) zum Verdichten von Knochengewebe (104), **dadurch gekennzeichnet, dass**
die jeweilige Ausnehmung (36) mit Schneidbereich (86) und Verdichtungsbereich (90) eine im Wesentlichen sinuswellenförmige Kontur aufweist, und wobei der Verdichtungsbereich (90) gerundet ausgebildet ist und in einem Schnitt in koronaler Richtung gesehen von einem in radialer Richtung der Mittelachse (58) nächsten Punkt (96) maximaler Ausnehmungstiefe eine aus der dortigen Konkavität startende S-Kurve aufweist, und wobei der Öffnungswinkel (α) der jeweiligen Ausnehmung (36) ein spitzer Winkel ist, und wobei der Schneidbereich (86) gerundet ausgebildet ist und in einem Schnitt in koronaler Richtung gesehen von einem in radialer Richtung der Mittelachse (58) nächsten Punkt maximaler Ausnehmung in Richtung der Schneidkante (88) eine Kontur mit konstantem Radius auf, der in einen Geradenabschnitt übergeht.

2. Dentalimplantat (2) nach Anspruch 1, wobei der Winkel der jeweiligen Schneidkante (88) bezogen auf die Tangente des Außendurchmessers des Gewindes (32) zwischen 70 - 150° liegt.

3. Dentalimplantat (2) nach Anspruch 1 oder 2, wobei der Winkel des Anstellwinkels der Schneidkante (88) bezogen auf die Seitenansicht der Schneide zwischen 20 - 80° beträgt.

4. Dentalimplantat (2) nach einem der vorherigen Ansprüche, wobei ein Zonenverhältnis einer umfangsseitigen Ausdehnung einer passiven Gewindezone (GU-A), in der keine Ausnehmung (36) vorhanden ist zu einer umfangsseitigen Ausdehnung einer aktiven Zone (SU-A), in der eine Ausnehmung (36) vorhanden ist, größer als 1.

5. Dentalimplantat (2) nach Anspruch 4, wobei das Zonenverhältnis von der Implantatspitze (28) in koronaler Richtung (18) von einem Wert größer als 1 zu einem Wert größer als 5, insbesondere 6 steigt.

6. Dentalimplantat (2) nach einem der vorherigen Ansprüche, wobei ein Ausnehmungsverhältnis zwischen einem maximalen Schneidenradius (Rₐ), welcher der radialen Entfernung der Schneidkante (88) bzw. eines Punktes, insbesondere am meisten entfernten Punktes, der Schneidkante (88) zur Mittelachse (58) des Dentalimplantats (2) entspricht, und einer maximalen Ausnehmungstiefe (Rᵢ), die die radiale Entfernung des Punktes (96) der Ausnehmung (36), der am nächsten zur Mittelachse (58) des Dentalimplantats (2) liegt, in koronaler Richtung (18), insbesondere von 1,7 auf 1,0.

7. Dentalimplantat (2) nach einem der vorherigen Ansprüche, wobei die Ausnehmungen (36) entlang des Gewindes (32) wenigstens einen kanalförmigen Spanraum (40) bilden, der sich von einer Implantatspitze (28) zum Gewindeauslauf (38) erstreckt.

8. Dentalimplantat (2) nach Anspruch 7, mit drei kanalförmigen Spanräumen (40), die in Umfangrichtung gleichverteilt sind.

9. Dentalimplantat (2) nach Anspruch 7 oder 8, wobei der jeweilige kanalförmige Spanraum (40) radial gewunden im Gewinde (32) verläuft.

10. Dentalimplantat (2) nach einem der Ansprüche 7 bis 9, wobei die radiale Steigung des jeweiligen kanalförmigen Spanraums (40) zwischen 15 mm und 30 mm pro Umdrehung des Gewindes (32) beträgt.

11. Dentalimplantat (2) nach einem der vorherigen Ansprüche, wobei die Tiefe der Ausnehmungen (36) vom apikalen Ende (20) zum zervikalen Ende (6) des Dentalimplantats (2) gesehen abnimmt.

12. Dentalimplantat (2) nach einem der vorherigen Ansprüche, wobei das jeweilige Gewinde (32) eine konstante Steigung aufweist.

13. Dentalimplantat (2) nach Anspruch 12, mit einem einzigen Gewinde (32), welches eine Steigung zwischen 0,6 - 0,9 mm aufweist.

14. Dentalimplantat (2) nach Anspruch 13, mit einem Doppelgewinde mit einer Steigung zwischen 1,2 mm und 1,8 mm.

15. Dentalimplantat (2) nach einem der vorherigen Ansprüche, wobei im zervikalen Bereich (6), insbesondere am Implantathals (10), Vertiefungen (110) angeordnet sind, welche in radialer Umfangrichtung voneinander getrennt sind.

16. Dentalimplantat (2) nach Anspruch 15, wobei die Vertiefungen (110) in mehreren Zonen, insbesondere paarweise radial versetzten Reihen, angeordnet sind.

17. Dentalimplantat (2) nach Anspruch 15 oder 16, wobei die Vertiefungen (110) als radial verlaufende Kerben ausgebildet sind.

18. Dentalimplantat (2) nach Anspruch 17, wobei die Vertiefungen (110) als rhombische Vertiefungen ausgebildet sind.

19. Dentalimplantat (2) nach Anspruch 18, wobei die rhombischen Vertiefungen geneigt zu einer Mittelachse (58) des Dentalimplantates (2) angeordnet sind.

20. Dentalimplantat (2) nach einem der Ansprüche 15 bis 19, wobei die Vertiefungen (110) zwischen 0,08 mm und 0,15 mm, insbesondere 0,11 mm tief sind.

## Claims

1. Dental implant (2) with a prosthetic interface (14) in its cervical area (6), a core (26) and at least one thread (32) that extends from the cervical area to an opposite apical area (20), wherein the thread (32) has recesses (36) on which a cutting edge (88) for cutting bones is arranged, the respective cutting edge (88) being arranged on the rear of the recess (36) seen in the direction of rotation (82) of the dental implant (2) on insertion,
wherein
the respective recess (36) has a cutting area (86) on which the cutting edge (88) is arranged, and adjoining the cutting area (86) a compacting area (90) for compacting bone tissue (104), **characterised in that**
the respective recess (36) with cutting areas (86) and compacting area (90) has an essentially sinusoidal contour, and wherein the compacting area (90) is rounded in design and in cross-section seen in the coronal direction from a next point (96) of maximum recess depth in the radial direction of the middle axis (58), has an S-curve starting from the concavity there, and wherein the opening angle (α) of the respective recess (36) is an acute angle, and wherein the cutting area (86) is rounded in design and in a cross-section seen in the coronal direction from a next point of maximum recess in the radial direction of the middle axis (58) in the direction of the cutting edge (88) has a contour with a constant radius which transitions into a straight section.

2. Dental implant (2) according to claim 1, wherein the angle of the respective cutting edge (88) in relation to the tangent of the outer diameter of the thread (32) is between 70 and 150°.

3. Dental implant (2) according to claim 1 or 2, wherein the angle of the angle of attack of the cutting edge (88) in relation to the side view of the cutter is between 20 and 80°.

4. Dental implant (2) according to any one of the preceding claims, wherein a zone ratio of a circumferential extension of a passive thread zone (GU-A), in which there is no recess (36) to a circumferential extension of an active zone (SU-A), in which there is a recess (36), is greater than 1.

5. Dental implant (2) according to claim 4, wherein the zone ratio increases from the implant tip (28) in the coronal direction (18) from a value of greater than 1 to a value of greater than 5, more particularly 6.

6. Dental implant (2) according to any one of the preceding claims, wherein a recess ratio between a maximum cutter radius (Ra) which corresponds to the radial distance of the cutting edge (88) or a point, more particularly at the furthest removed point, of the cutting edge (88), to the middle axis (58) of the dental implant (2), and a maximum recess dept (Ri) which corresponds to the radial distance of the point (96) of the recess (36) closest to the middle axis (58) of the dental implant (2) decreases in the coronal direction (18), more particularly from 1.7 to 1.0.

7. Dental implant (2) according to any one of the preceding claims, wherein the recesses (36) along the thread (32) form at least one channel-shaped chip space (40), which extends from an implant tip (28) to the thread run-out (38).

8. Dental implant (2) according to claim 7, with three channel-shaped chip spaces (40) that are evenly distributed in the circumferential direction.

9. Dental implant (2) according to claim 7 or 8, wherein the respective channel-shaped chip space (40) extends wound radially in the thread (32).

10. Dental implant (2) according to any one of claims 7 to 9, wherein the radial pitch of the respective channel-shaped chip space (40) is between 15 mm and 30 mm per turn of the thread (32).

11. Dental implant (2) according to any one of the preceding claims, wherein the depth of the recesses (36) decreases seen from the apical end (20) to the cervical end (6) of the dental implant (2).

12. Dental implant (2) according to any one of the preceding claims, wherein the respective thread (32) has a constant pitch.

13. Dental implant (2) according to claim 12, with a single thread (32), which has a pitch of between 0.6 and 0.9 mm.

14. Dental implant (2) according to claim 13, with a double thread with a pitch of between 1.2 mm and 1.8 mm.

15. Dental implant (2) according to any one of the preceding claims, wherein in the cervical area (6), more particularly at the implant neck (10), recesses (110) are arranged which are separated from one another in the radial circumferential direction.

16. Dental implant (2) according to claim 15, wherein the recesses (110) are arranged in several zones, more particularly pairs of radially offset rows.

17. Dental implant (2) according to claim 15 or 16, wherein the recesses (110) are designed a radially extending notches.

18. Dental implant (2) according to claim 17, wherein the recesses (110) are designed as rhombic recesses.

19. Dental implant (2) according to claim 18, wherein the rhombic recesses are arranged inclined in relation to a middle axis (58) of the dental implant (2).

20. Dental implant (2) according to any one of claims 15 to 19, wherein the recesses (110) are between 0.08 mm and 0.15, more particularly 0.11 mm in depth.

## Revendications

1. Implant dentaire (2) comprenant une interface prothétique (14) dans une région cervicale (6), un noyau (26) et au moins un filetage (32) qui s'étend de la zone cervicale (6) vers une zone apicale (20) opposée, dans lequel le filetage (32) présente des évidements (36) sur lesquels une arête de coupe (88) pour couper des os est disposée, l'arête de coupe (88) respective est disposée au dos de l'évidement (36) vu dans le sens de rotation (82) de l'implant dentaire (2) lors de l'insertion,
dans lequel
l'évidement (36) respectif présente une zone de coupe (86) sur laquelle l'arête de coupe (88) est disposée et une zone de compression (90) délimitée sur la zone de coupe (86) pour comprimer du tissu osseux (104), **caractérisé en ce que**
l'évidement (36) respectif avec zone de coupe (86) et zone de compression (90) présente un contour essentiellement sinusoïdal, et dans lequel la zone de compression (90) est conçue arrondie et, dans une coupe vue dans la direction coronale d'un point suivant (96) de profondeur d'évidement maximal dans le sens radial de l'axe médian (58), présente une courbe S démarrant à partir de la concavité locale, et dans lequel l'angle d'ouverture (α) de l'évidement respectif (36) est un angle pointu, et dans lequel la zone de coupe (86) est conçue arrondie et, dans une coupe vue dans le sens coronal d'un point suivant d'allongement maximal dans le sens radial de l'axe médian (58), en direction de l'arête de coupe (88), un contour avec un rayon constant qui passe dans un tronçon droit.

2. Implant dentaire (2) selon la revendication 1, dans lequel l'angle de l'arête de coupe (88) respective rapporté à la tangente du diamètre extérieur du filetage (32) fait entre 70 - 150°.

3. Implant dentaire (2) selon la revendication 1 ou 2, dans lequel l'angle de l'angle d'attaque de l'arête de coupe (88) rapporté à la vue latérale de la lame fait entre 20-80°.

4. Implant dentaire (2) selon l'une des revendications précédentes, dans lequel un rapport de zone d'un allongement périphérique d'une zone de filetage passive (GU-A) où aucun évidement (36) n'est présent à un allongement périphérique d'une zone active (SU-A) où un évidement (36) est présent, est supérieur à 1.

5. Implant dentaire (2) selon la revendication 4, dans lequel le rapport de zone de la pointe d'implant (28) dans le sens coronal (18) augmente d'une valeur supérieure à 1 à une valeur supérieure à 5, en particulier à 6.

6. Implant dentaire (2) selon l'une des revendications précédentes, dans lequel un rapport d'évidement entre un rayon de coupe maximal (Ra), lequel correspond à l'éloignement radial de l'arête de coupe (88) respectivement d'un point, en particulier d'un point le plus éloigné, de l'arête de coupe (88) par rapport à l'axe médian (58) de l'implant dentaire (2), et une profondeur d'évidement (Ri) maximale qui l'éloignement radial du point (96) de l'évidement (36) qui est le suivant par rapport à l'axe médian (58) de l'implant dentaire (2), vu dans le sens coronal (18), est en particulier de 1,7 à 1,0.

7. Implant dentaire (2) selon l'une des revendications précédentes, dans lequel les évidements (36) le long du filetage (32) forment au moins un espace de copeaux en forme de canal (40) qui s'étend d'une pointe d'implant (28) jusqu'à la fin de filet (38).

8. Implant dentaire (2) selon la revendication 7, comprenant trois espaces de copeaux en forme de canal (40) qui sont répartis régulièrement sur le pourtour.

9. Implant dentaire (2) selon la revendication 7 ou 8, dans lequel l'espace de copeaux (40) en forme de canal respectif passe enroulé dans le filetage (32).

10. Implant dentaire (2) selon l'une des revendications 7 à 9, dans lequel la pente radiale de l'espace de copeaux (40) en forme de canal respectif fait entre 15 mm et 30 mm par rotation du filetage (32).

11. Implant dentaire (2) selon l'une des revendications précédentes, dans lequel la profondeur des évidements (36) vue de l'extrémité apicale (20) à l'extrémité cervicale (6) de l'implant dentaire (2) décroît.

12. Implant dentaire (2) selon l'une des revendications précédentes, dans lequel le filetage (32) respectif présente une pente constante.

13. Implant dentaire (2) selon la revendication 12, comprenant un seul filetage (32) qui présente une pente entre 0,6 - 0,9 mm.

14. Implant dentaire (2) selon la revendication 13, comprenant un filetage double avec une pente entre 1,2 mm et 1,8 mm.

15. Implant dentaire (2) selon l'une des revendications précédentes, dans lequel dans la zone cervicale (6), en particulier sur le collet de l'implant (10), des creux (110) sont disposés qui sont séparés l'un de l'autre dans le sens périphérique radial.

16. Implant dentaire (2) selon la revendication 15, dans lequel les creux (110) sont disposés dans plusieurs zones, en particulier en rangées décalées radialement par paires.

17. Implant dentaire (2) selon la revendication 15 ou 16, dans lequel les creux (110) sont conçus en tant qu'encoches radiales.

18. Implant dentaire (2) selon la revendication 17, dans lequel les creux (110) sont conçus en tant que creux rhombiques.

19. Implant dentaire (2) selon la revendication 18, dans lequel les creux rhombiques sont disposés inclinés par rapport à un axe médian (58) de l'implant dentaire (2).

20. Implant dentaire (2) selon l'une des revendications 15 à 19, dans lequel les creux (110) font entre 0,08 mm et 0,15 mm, en particulier 0,11 mm de profondeur.
